(19) Europäisches Patentamt
European Patent Office
Office européen des brevets

(11) EP 3 553 871 A1

(12) EUROPEAN PATENT APPLICATION
published in accordance with Art. 153(4) EPC

(43) Date of publication:
**16.10.2019 Bulletin 2019/42**

(21) Application number: **16923478.8**

(22) Date of filing: **07.12.2016**

(51) Int Cl.:
***H01M 10/12*** *(2006.01)* ***H01M 10/08*** *(2006.01)*

(86) International application number:
**PCT/JP2016/086430**

(87) International publication number:
**WO 2018/105066 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Hitachi Chemical Company, Ltd.**
**Chiyoda-ku**
**Tokyo 100-6606 (JP)**

(72) Inventors:
- **ABE Masayuki**
  **Tokyo 100-6606 (JP)**
- **MARUYAMA Kazuya**
  **Tokyo 100-6606 (JP)**

(74) Representative: **Hoffmann Eitle**
**Patent- und Rechtsanwälte PartmbB**
**Arabellastraße 30**
**81925 München (DE)**

# (54) LIQUID TYPE LEAD STORAGE BATTERY AND PRODUCTION METHOD THEREFOR

(57) The present disclosure provides a production method of a liquid type lead storage battery. This production method includes: a step of providing a battery case divided into two or more regions by one or a plurality of partition walls; a step of providing two or more electrode plate groups each including a plurality of positive electrode plates, a plurality of separators and a plurality of negative electrode plates; a step of accommodating the electrode plate groups in the regions of the battery case; and a step of supplying an electrolytic solution in the battery case, wherein when the electrode plate groups are accommodated in the regions of the battery case, the electrode plate groups are pressed into the regions while a compressive force in a thickness direction of the electrode plate groups is given to the electrode plate groups from the partition walls.

*Fig.1*

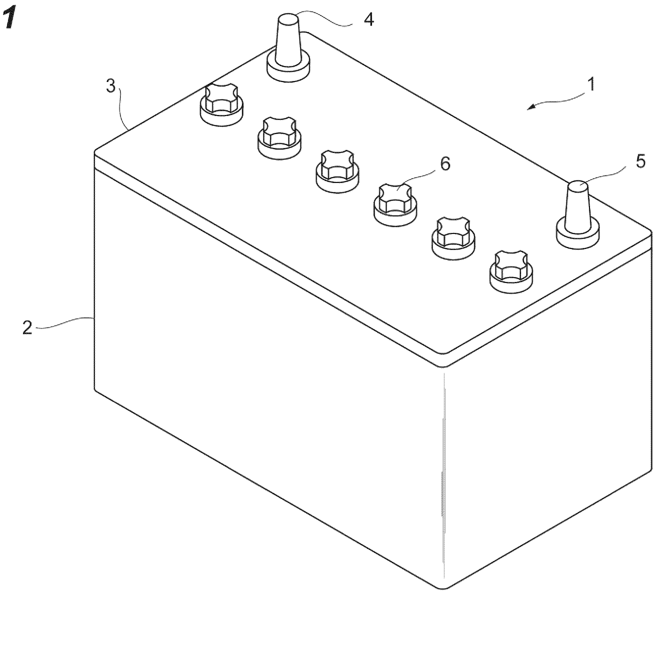


EP 3 553 871 A1

## Description

### Technical Field

The present disclosure relates to a liquid type lead storage battery and a production method therefor.

### Background Art

Lead storage batteries are used for various applications for engine start of vehicles and backup power supplies. In particular, lead storage batteries for engine start of vehicles supply power to cell motors for engine start and also supply power to various electrical and electronic devices mounted on vehicles. In recent years, in efforts to protect the environment and improve the fuel efficiency, studies have been made in applying a lead storage battery to, for instance, a start-stop system vehicle (idling stop system vehicles, hereinafter referred to as "ISS vehicle") which reduces an operation time of an engine, and a micro-hybrid vehicle such as a power generation control vehicle which reduces the power generation of an alternator by a power of an engine.

It is known that when a lead storage battery is overcharged, the electrolysis occurs by which water in an electrolytic solution is decomposed into oxygen gas and hydrogen gas. When the electrolysis occurs, gases (oxygen gas and hydrogen gas) generated by the electrolysis are discharged outside the system, and accordingly a water content in the electrolytic solution decreases. As a result, a concentration of sulfuric acid in the electrolytic solution increases, and a reduction of the capacity progresses due to the corrosion deterioration of a positive electrode plate or the like. In addition, if the electrode plate is exposed from the electrolytic solution as a liquid level of the electrolytic solution lowers, such problems occur that the discharge capacity suddenly decreases, and that the connecting portion between the negative electrode plate and the strap or the strap itself corrodes. Even if the electrolytic solution is decreased, the problems do not occur as long as maintenance of replenishing the battery case with water is performed. However, it is required to suppress a decrease of water in the electrolytic solution, from the viewpoint of decreasing the frequency of the maintenance.

Patent Literature 1 discloses that at least any one of a negative electrode active material, a positive electrode active material and an electrolytic solution contains at least one member element of the group consisting of antimony, nickel, silver, molybdenum, copper and tellurium; the electrolytic solution contains aluminum ions and lithium ions, thereby suppressing a reduction of the electrolytic solution in a liquid type lead storage battery.

### Citation List

### Patent Literature

Patent Literature 1: Japanese Patent No. 5656068

### Summary of Invention

### Technical Problem

A lead storage battery to be mounted on a micro-hybrid vehicle such as a power generation control vehicle, and a start-stop system vehicle is used in a state where it is partially charged, called as PSOC (a partial state of charge). It has become clear by the knowledge of the present inventors that even under a lead storage battery used under PSOC, electrolysis of an electrolytic solution occurs, and a water content in the electrolytic solution decreases. This cause is not necessarily clear, but in regard to the cause, the present inventors assume that it is a main cause that a portion locally exists at which an active material becomes a fully charged state in an electrode even when the lead storage battery is under PSOC, and that electrolysis of the electrolytic solution occurs in the portion.

As described above, Patent Literature 1 discloses a technology of suppressing a reduction of an electrolytic solution by blending a specific element with an active material or an electrolytic solution. This technology enables a reduction of an electrolytic solution to be suppressed to some extent; however, since use of the specific element is necessary in producing a lead storage battery, this technology has a problem of increasing a cost of the lead storage material.

An object of the present disclosure is to provide: a liquid type lead storage battery which can sufficiently suppress a reduction of an electrolytic solution caused by overcharge even without containing a specific element in an active material or the electrolytic solution, and a production method therefor.

**Solution to Problem**

The present inventors have studied an influence on the performance of a liquid type lead storage battery, which is given by the number of electrode plates accommodated in each region of a battery case, wherein the battery case is divided into a plurality of regions. In that process, it has been found that in a state where a plurality of electrode plates (electrode plate group) accommodated in a battery case are compressed in their thickness direction, a reduction of an electrolytic solution can be effectively suppressed; that is, a liquid reduction performance of a liquid type lead storage battery can be enhanced. Based on this finding, the present inventors have completed the following inventions.

One aspect of the present invention is to provide a method for producing a liquid type lead storage battery. This production method includes: a step of providing a battery case divided into two or more regions by one or a plurality of partition walls; a step of providing two or more electrode plate groups each including a plurality of positive electrode plates, a plurality of separators and a plurality of negative electrode plates; a step of accommodating the electrode plate groups in the regions of the battery case; and a step of supplying an electrolytic solution in the battery case, wherein when the electrode plate groups are accommodated in the regions of the battery case, the electrode plate groups are pressed into the regions while a compressive force in a thickness direction of the electrode plate groups is given to the electrode plate groups from the partition walls.

In a conventional method for producing a liquid type lead storage battery, when an electrode plate group is accommodated in a battery case, the electrode plate group is not pressed into the battery case but brought down into a predetermined region by using gravity from the viewpoint of an increase of efficiency in working. Thus, a width X of a region into which an electrode plate group should be accommodated is sufficiently larger than a thickness Y of the electrode plate group, and usually, a clearance (X-Y) is set to about 1.5 to 2.0 mm. In contrast, the production method according to the present disclosure implements, at the step of accommodating the electrode plate group into the battery case, a work to press the electrode plate group into the battery case; and this brings into a state where a certain level of compressive force is applied to the electrode plate group accommodated in the battery case. A distance between a positive electrode plate and a negative electrode plate adjacent to each other through a separator (distance between electrode plates) can be exactly set by this state.

The present disclosure is based on the original knowledge of the present inventors that exact setting of a distance between electrode plates is useful in suppressing a reduction of an electrolytic solution caused by overcharge. A mechanism that a distance between electrode plates brings a suppression effect of reducing an electrolytic solution is not necessarily clear, but the present inventors assumes as follows. That is, when a liquid type lead storage battery is in an overcharged state, air bubbles (oxygen gas and hydrogen gas) are adhered to each surface of electrode plates (positive electrode plate and negative electrode plate). Setting a distance between electrode plates so that these air bubbles are unlikely to be detached from surfaces of the electrode plates or move upward can maintain a state where the air bubbles are adhered to the surfaces of the electrode plates. The air bubbles adhered to the surfaces of the electrode plates prevent a further progress of electrolysis. This can suppress a reduction of an electrolytic solution; and as a result, the frequency of maintenance for supplying water can be lowered.

Specific embodiments of the present disclosure are described below. When a width of a region for accommodating an electrode plate group is represented by X mm and a thickness of the electrode plate group is represented by Y mm, X and Y satisfy the following conditional expression. When the value of X-Y (clearance) is -1.1 or more, a work to accommodating an electrode plate group in a region of a battery case tends to be easily performed; on the other hand, when the value is 1.2 or less, a distance between electrode plates tends to be easily set exactly.

$$-1.1 \leq X\text{-}Y \leq 1.2$$

One aspect of the present invention is to provide a liquid type lead storage battery satisfying the above conditional expression. This liquid type lead storage includes: a battery case divided into two more regions by one or a plurality of partition walls; electrode plate groups each accommodated in the two or more regions, wherein each group includes a plurality of positive electrode plates, a plurality of separators and a plurality of negative electrode plates; and an electrolytic solution accommodated in the battery case, wherein when a width of the region is represented by X mm and a thickness of the electrode plate group is represented by Y mm, X and Y satisfy the following conditional expression.

$$-1.1 \leq X\text{-}Y \leq 1.2$$

A liquid type lead storage battery according to the present disclosure is in a state where a certain level of compressive force is applied to an electrode plate group in a battery case, and this enables exact setting of a distance

between a positive electrode plate and a negative electrode plate adjacent to each other through a separator (distance between electrode plates). As described above, air bubbles on surface of electrode plates prevent progress of electrolysis of water even in an overcharged state, thereby suppressing a reduction of an electrolytic solution; and as a result, the frequency of maintenance for supplying water can be lowered. When the value of X-Y (clearance) is -1.1 or more, a reduction of an electrolytic solution can be sufficiently suppressed and also, a short circuit tends to be suppressed. In addition, when the value of X-Y (clearance) is 1.2 or less, a reduction of an electrolytic solution tends to be sufficiently suppressed.

From the viewpoint of setting of a distance between electrode plates more exactly and from the viewpoint of the contact property between a surface of an electrode plate and an electrolytic solution, a separator may have a plurality of ribs extending in a longitudinal direction of the separator. In this case, a thickness of the separator at a portion where the ribs are provided is, for instance, 0.4 to 0.75 mm. The separator may be formed of a material having flexibility.

From the viewpoint of suppressing a reduction of an electrolytic solution more sufficiently and from the viewpoint of the contact property between a surface of an electrode plate and an electrolytic solution, a distance between the positive electrode plate and the negative electrode plate adjacent to each other is, for instance, 0.4 to 0.75 mm.

From the viewpoint of suppressing a reduction of an electrolytic solution more sufficiently and suppressing a short circuit at the time of overdischarging, the electrolytic solution may contain aluminum ions at a concentration of 0.001 to 0.2 mol/L.

The negative electrode plate may have: a negative electrode material filled portion comprised of a negative electrode material; and a negative electrode current collector having a negative electrode material supporting portion supporting the negative electrode material filled-portion, an upper peripheral portion formed into a belt shape on an upper side of the negative electrode material supporting portion, and an ear portion provided on the upper peripheral portion.

The use of the lead storage battery in the PSOC state leads to a problem of "ear thinning phenomenon" which has not occurred in such a situation that the lead storage battery is used in a conventional fully charged state. This is such a phenomenon that the thickness of the ear portion decreases with the passage of time, due to such a cause that the ear portion (current collecting portion) of a negative electrode current collector is used for a discharge reaction, and the like. When the ear thinning phenomenon occurs, the resistance of the ear portion increases, and thereby a performance (for instance, charge-discharge characteristics and cycle life) of the lead storage battery decreases. When the ear thinning phenomenon further progresses, the ear portion ruptures, and such a situation suddenly happens that an output cannot be obtained from the lead storage battery. Such a lifetime mode is also referred to as "sudden end of the lifetime" and is a situation to be particularly avoided in an automotive battery. From the viewpoint of suppressing a reduction of an electrolytic solution more sufficiently and suppressing the above "ear thinning phenomenon," a surface of the ear portion may be composed of a surface layer containing Sn or a Sn alloy.

The partition wall of the battery case may have a flat portion, a plurality of rib portions protruding from the flat portion and extending in a height direction of the battery case, and an inclined portion provided at an entry side of the region from the flat portion to the rib portion. Providing the partition wall of the battery case with the rib portions and the inclined portion enables the electrode plate group to be easily accommodated in the region of the battery case and enables a compressive force to be easily applied to the electrode plate group.

## Advantageous Effects of Invention

According to the present disclosure, a liquid type lead storage battery which can sufficiently suppress a reduction of an electrolytic solution caused by overcharge; and a production method therefor are provided.

## Brief Description of Drawings

Figure 1 is a perspective view showing a lead storage battery according to an embodiment.
Figure 2 is a view showing an internal structure of the lead storage battery shown in Figure 1.
Figure 3 is a perspective view showing one example of a battery case.
Figure 4 is a cross-sectional view taken along the line IV-IV of Figure 3.
Figure 5 is a perspective view showing one example of an electrode plate group.
Figure 6 is a front view showing an electrode plate (positive electrode plate or negative electrode plate).
Figure 7(a) is a cross-sectional view taken along the line VII-VII of Figure 6 and shows a positive electrode plate; and Figure 7(b) is a cross-sectional view taken along the line VII-VII of Figure 6 and shows a negative electrode plate.
Figure 8(a) and Figure 8(b) are front views each showing one example of a current collector (positive electrode current collector or negative electrode current collector).

Figure 9 is a view showing a bag-like separator and an electrode to be accommodated in the bag-like separator.
Figure 10(a) is a view showing one example of the separator; and Figure 10(b) is a cross-sectional view taken along the line Ib-Ib of Figure 10(a).
Figure 11 is a cross-sectional view showing one example of an arrangement of the separator and the electrode plate.
Figure 12 is a front view showing one example of the electrode plate group
Figure 13(a) is a view showing a step of accommodating the electrode plate group in a region of the battery case, and Figure 13(b) is a view showing a state where the electrode plate group is accommodated in the region of the battery case.

## Description of Embodiments

In the present specification, the term "layer" includes a structure of a shape formed on the whole area when observed as a plan view, and in addition, also a structure of a shape formed in one part. In the present specification, a numerical range indicated by using "to" indicates a range which includes numerical values described before and after "to" as the minimum value and the maximum value, respectively. In the numerical ranges which are described stepwise in the present specification, the upper limit value or the lower limit value of the numerical range of a certain stage may be replaced with the upper limit value or the lower limit value of the numerical range of another stage. In the numerical ranges which are described in the present specification, the upper limit value or the lower limit value of the numerical value range may be replaced with the value shown in the examples. The phrase "A or B" may include either one of A and B, and may also include both of A and B. Materials which are exemplified in the present specification can be used each singly or in combinations of two or more, unless otherwise specified. In the present specification, when a plurality of substances corresponding to each component exist in the composition, the content of each component in the composition means the total amount of the plurality of substances that exist in the composition, unless otherwise specified. The specific gravity varies depending on a temperature, and accordingly is defined as a specific gravity which is converted to that at 20°C, in the present specification.

Hereinafter, embodiments of a liquid type lead storage battery according to the present disclosure will be described in detail with reference to the drawings. Incidentally, in all the drawings, the same or corresponding portions shall be denoted by the same reference characters.

<Liquid type lead storage battery>

A liquid type lead storage battery according to the present embodiment (hereinafter, simply referred to as "lead storage battery") includes a battery case having two or more regions divided by one or more partition walls, an electrode plate group accommodated in each of the two or more regions and including a plurality of positive electrode plates, a plurality of separators and a plurality of negative electrode plates, and an electrolytic solution accommodated in the battery case. When a width of the region is represented by X mm and a thickness of the electrode plate group is represented by Y mm, X and Y satisfies the following conditional expression.

$$-1.1 \leq X\text{-}Y \leq 1.2$$

As a basic configuration of the liquid type lead storage battery according to the present embodiment, the same configuration as that of a conventional liquid type lead storage battery can be used. Figure 1 is a perspective view showing a lead storage battery (liquid type lead storage battery) according to the present invention; and Figure 2 is a view showing an internal structure of the lead storage battery shown in Figure 1. As shown in these figures, the lead storage battery 1 includes a battery case 2 having an opening in an upper face thereof and a plurality of electrode plate groups 11 accommodated therein; and a lid 3 which closes the opening of the battery case 2. The lid 3 is formed from polypropylene, and includes, for instance, a positive electrode terminal 4, a negative electrode terminal 5, and a liquid port plug 6 which blocks a liquid injection port provided in the lid 3. An electrolytic solution (not shown) is accommodated in the battery case 2.

(Battery case)

Figure 3 is a perspective view showing a battery case. Figure 4 is a cross-sectional view taken along the line IV-IV of Figure 3. As shown in Figures 3 and 4, an interior of the battery case 2 is divided into 6 sections by 5 partition walls 51, and 6 regions (cell chambers) 52 are formed. That is, the battery case 2 has 5 partition walls 51 and 6 regions (cell chambers) divided by the partition walls 51.

Each region 52 is a space, into which each electrode plate group 11 is inserted. The electrode plate group 11 is also referred to as a single cell, and the electromotive force thereof is 2 V. Electrical equipment for automobiles is driven by a raised or depressed voltage from the direct voltage of 12 V, and accordingly 6 electrode plate groups 11 are connected in series for 2 V × 6 = 12 V. Thus, when the lead storage battery 1 is used as electrical equipment for automobiles, 6 regions 52 are necessary. Incidentally, when the lead storage battery 1 is used for other purposes, the number of regions 52 is not limited to 6.

As shown in Figures 3 and 4, a plurality of ribs (rib portions) 53 extending in a height direction of the battery case 2 may be provided on both side surfaces of the partition walls 51 and a pair of inner wall surfaces 50 of the battery case 2, which are opposed to the partition walls 51. That is, the partition wall 51 may have a flat portion 54 and a plurality of ribs 53 extending to the height direction of the battery case 2 and protruding from the flat portion 54. The rib 53 has a function of appropriately pressing (compressing) the electrode plate group 11 inserted into the region 52 in a stacking direction of the electrode plate group 11 (the stacking direction of positive electrode plates 12 and negative electrode plates 13) when the electrode plate group 11 is stored in the battery case 2). The height of the rib 53 may be set so that the width X of the region 52 becomes a predetermined value. In addition, the partition wall 51 may further have an inclined portion 55 provided at an entry side of the region 52 from the flat portion 54 to the rib portion 53. By providing the partition walls 51 of the battery case 2 with the rib portions 53 and inclined portions 55, an operation to accommodate the electrode plate group 11 in the region 52 of the battery case 2 is easily conducted and a compressive force can be easily applied to the electrode plate group 11.

From the viewpoint of easy storage of the electrode plate group 11, it is preferable that the battery case 2 be a box with an upper face opened. In this case, the upper face of the box is covered with the lid 3. Incidentally, for bonding the box and the lid 3 to each other, an adhesive, thermal welding, laser welding, ultrasonic welding or the like can be appropriately used. The shape of the battery case 2 is not particularly limited, but it is preferably a square so that an ineffective space is reduced when electrodes (plate-like electrode plates and the like) are stored.

The material of the battery case 2 is not particularly limited, but it has to have resistance to an electrolytic solution (dilute sulfuric acid). Specific examples of the material of the battery case 2 include PP (polypropylene), PE (polyethylene) and ABS resin. When the material is PP, it is advantageous in terms of the acid resistance and the cost. In addition, in the case of ABS resin, thermal welding of the battery case 2 and the lid 3 is likely to be difficult, so use of PP as the material is advantageous also in terms of the processability. When the battery case 2 is a box with an upper face opened, the material of the battery case 2 may be the same as or different from that of the lid 3. From the viewpoint of no generation of an unreasonable stress, the materials having equal coefficients of thermal expansion are preferred.

(Electrode plate group)

Figure 5 is a perspective view showing one example of an electrode plate group; and as shown in Figure 5, the electrode plate group 11 includes a plurality of electrode plates (a plurality of positive electrode plates 12 and a plurality of negative electrode plates 13) and a plurality of separators, wherein the positive electrode plates 12 and the negative electrode plates 13 are stacked through separators thereby to form the electrode plate group 11. The electrode plate group 11 has, for instance, positive electrode plates 12, negative electrode plates 13, a bag-like separator 14, a positive electrode side strap 15, a negative electrode side strap 16, and a cell-connecting portion 17 or an electrode pole 18.

[Electrode plate]

Figure 6 is a front view showing an electrode plate (positive electrode plate 12 or negative electrode plate 13). Figure 7 is a cross-sectional view taken along the line VII-VII of Figure 6; Figure 7(a) illustrates a cross-sectional view of the positive electrode plate 12; and Figure 7(b) illustrates a cross sectional view of the negative electrode plate 13. Figure 8 is a front view showing a current collector (positive electrode current collector 21 or negative electrode current collector 31). In Figures 6 and 8, the reference numerals in parentheses denote structures of the negative electrode plate 13.

The electrode plate (positive electrode plate 12 and negative electrode plate 13) has, for instance, an electrode material filled portion (positive electrode material filled portion 24 and negative electrode material filled portion 34) comprised of an electrode material (positive electrode material 23 and negative electrode material 33); and a current collector (positive electrode current collector 21 and negative electrode current collector 31) supporting the electrode material filled portion. In the electrode plate, a portion filled with an electrode material is an electrode material filled portion (portion with sandy soil-like hatching in Figure 6).

The current collector (positive electrode current corrector 21 and negative electrode current collector 31) constitutes an electrically-conducting path for a current to the electrode material (positive electrode material 23 and negative electrode material 33). As shown in Figure 8(a) and Figure 8(b), the current collector has, for instance, an electrode

material supporting portion (positive electrode material supporting portion 21a and negative electrode material supporting portion 31a) supporting the electrode material, an upper side frame portion (upper peripheral portion 21b of the positive electrode current collector and upper peripheral portion 31b of the negative electrode current collector) formed into a belt shape on an upper side of the electrode material supporting portion, and an ear portion (positive electrode ear portion 22 and negative electrode ear portion 32) provided in the upper side frame portion. The contour of the electrode material supporting portion is, for instance, a rectangle (oblong or square), and is formed in a grid shape. The electrode material supporting portion may have such a shape that the lower corner portion is cut off, as shown in Figure 8(b). The ear portion is provided, for instance, in such a way as to protrude upward from the upper side frame portion of the current collector. Incidentally, the ear portion may be restated as a current collector (positive electrode current collector and negative electrode current collector).

Examples of a composition of the current collector include a lead-calcium-tin alloy, a lead-calcium alloy and a lead-antimony alloy. The current collector can be obtained by forming these lead alloys into a grid shape by a gravity casting method, an expanding method, a stamping method or the like. Incidentally, the current collector shown in Figure 8 is an expanded grid body.

As shown in Figure 7(b), the surface of the current collecting portion 32 of the negative electrode is formed by a surface layer 32a containing Sn. In this case, the composition in other portions than the surface layer 32a of the negative electrode current collector 31 may be similar to that of the positive electrode current collector 21. When at least a part of the surface of the current collecting portion 32 of the negative electrode substantially contains Sn (tin), a reduction of an electrolytic solution can be sufficiently suppressed and an ear thinning phenomenon tends to be suppressed. It is not clear why the lead storage battery can more sufficiently suppress the reduction of the electrolytic solution due to the surface of the current collecting portion 32 of the negative electrode at least a part of which substantially contains Sn (tin); but the present inventors guess the cause in the following way. Specifically, the exposure of the lead on the surface of the current collecting portion 32 of the negative electrode becomes little; thereby the surface of the current collecting portion 32 of the negative electrode resists forming a local cell; and the corrosion by an action of the local battery is suppressed. As a result, the electrolysis of the electrolytic solution that occurs on the surface of a corroded current collecting portion 32 of the negative electrode is suppressed, and thus, it is inferred that the reduction of the electrolytic solution can be more sufficiently suppressed. The surface layer may contain mainly Pb except for Sn. The surface layer may contain a Sn alloy.

The content of Sn is, for instance, 4 parts by mass or more, and may also be 9 parts by mass or more, 30 parts by mass or more, or 50 parts by mass or more based on the total mass of the surface layer, from the viewpoint that an ear thinning phenomenon can be more suppressed. The content of Sn may be 100 parts by mass from the viewpoint that an ear thinning phenomenon is more suppressed and the viewpoint of the production. Incidentally, when the content of Sn is 100 parts by mass, in other words, when the surface layer 32a consists of Sn, the surface layer 32a may contain unavoidable impurities other than Sn. Examples of such impurities include Ag, Al, As, Bi, Ca, Cd, Cu, Fe, Ni, Sb and Zn.

Incidentally, it is preferable that the whole of the current collecting portion 32 of the negative electrode be covered with the surface layer 32a, but there may exist a portion on which the surface layer 32a is not provided. For instance, the surface layer 32a may be provided only on one principal surface of the current collecting portion 32a of the negative electrode.

The negative electrode current collector 31 having the surface layer 32a may be produced by the same method as for the positive electrode current collector 21 except that, for instance, the surface layer 32a is formed. A method for producing the negative electrode current collector 31 may include, for instance, a step of producing a current collector by a similar method to that for the positive electrode current collector 21, and thereafter, a step of forming the surface layer 32a at a predetermined location; or may include a step of providing an alloy plate on which the surface layer 32a is formed beforehand, and a step of working the alloy plate thereby to obtain the negative electrode current collector 31.

Examples of a method for forming the surface layer 32a include a rolling method, and a hot-dip plating method. The rolling method is a method of overlapping a material (for instance, a metal plate, an alloy plate or the like) on which the surface layer 32a is to be formed with a material (for instance, a sheet containing Sn) which forms the surface layer 32a; and rolling the overlapped materials. On the other hand, the hot-dip plating method is a method of immersing a portion on which the surface layer 32a should be formed, in a melting basin in which a material (a material containing Sn) for forming the surface layer 32a is melted; and plating the portion. In the present embodiment, among these methods, the rolling method is preferable.

The method for forming the surface layer 32a by the rolling method may be, for instance, the following method. Firstly, a rolled sheet is produced by operations (process of producing a rolled sheet) of: overlapping a Sn sheet for forming the surface layer 32a on both surfaces of a sheet-shaped lead alloy (substrate); and rolling the resultant sheet with a rolling roller. Next, the rolled sheet is expanded by an expander while the position of the rolled sheet is adjusted so that the surface layer 32a is formed in a region which corresponds to the current collecting portion 32 of the negative electrode of the negative electrode current collector 31 (expanding method). The negative electrode current collector 31 having the surface layer 32a is obtained thereby. Incidentally, in this rolling method, the thickness of the surface layer

32a can be easily adjusted by an operation adjusting the thickness of the alloy which becomes the substrate, the thickness of the sheet which becomes the surface layer 32a, and/or the thickness of the sheet after rolling. The thickness d of the surface layer 32a after rolling may be, for instance, 10 to 60 μm from the viewpoint of the manufacture.

[Separator]

A separator according to the present embodiment may be a separator composed of, for instance, at least one selected from glass, pulp and synthetic resins. In addition, the separator according to the present embodiment may be a separator having flexibility. Among the above separators, it is preferable to use a synthetic resin from the viewpoint of more suppressing a short circuit and from the viewpoint that an electrode plate group is easily compressed by having flexibility. Further, among the synthetic resins, in particular, a polyolefin is preferred. Hereinafter, one example of the separator of the present embodiment is explained by use of Figures 9 to 11.

Figure 9 is a view showing a bag-like separator 14, and an electrode plate (for instance, a negative electrode plate 13) to be accommodated in the bag-like separator 14. Figure 10(a) is a front view showing a separator 40, which is used to prepare the bag-like separator 14; and Figure 10(b) is a cross-sectional view of the separator 40. Figure 11 is a cross-sectional view of the separator 40 and the electrode plate (positive electrode plate 12 and negative electrode plate 13).

In the present embodiment, the separator 40 may be used as a separator with no change; however, as shown in Figure 9, it is preferable to use the bag-like separator 14 so as to be able to accommodate at least one of the positive electrode plate 12 and the negative electrode plate 13. For instance, such an embodiment is preferable that one of the positive electrode plate 12 and the negative electrode plate 13 is accommodated in the bag-like separator 14 and is alternately layered on the other of the positive electrode plate 12 and the negative electrode plate 13. When the bag-like separator 14 is applied to the positive electrode plate 12, there is a possibility that the positive electrode plate 12 penetrates the separator by the elongation of the positive electrode current collector 21; and accordingly, it is preferable that the negative electrode plate 13 be accommodated in the bag-like separator 14. Further, as shown in Figure 9, the separator preferably has a convex rib and a base portion supporting the rib.

As shown in Figure 10, the separator 40 has a flat base portion 41, a plurality of convex (for instance, a linear shape) ribs 42, and mini ribs 43. The base portion 41 supports the ribs 42 and the mini ribs 43. When the separator 40 has mini ribs 43, a distance between electrode plates can be set exactly and the contact property between a surface of an electrode plate and an electrolytic solution can also be improved. The plurality (large number) of ribs 42 are formed in the middle in a width direction of the separator 40 in such a way as to extend in a longitudinal direction of the separator 40. The plurality of ribs 42 are arranged in such a way as to be approximately parallel to each other on one surface 40a of the separator 40. The interval between ribs 42 is, for instance, 3 to 15 mm. One end in a height direction of the rib 42 is integrated with the base portion 41, and the other end in the height direction of the rib 42 comes into contact with one electrode plate 44a out of the positive electrode plate 12 and the negative electrode plate 13 (see Figure 11). The base portion 41 faces the electrode plate 44a in the height direction of the rib 42. No rib is arranged on the other surface 40b of the separator 40; and the other surface 40b of the separator 40 faces or comes in contact with the other electrode 44b (see Figure 11) out of the positive electrode plate 12 and the negative electrode plate 13. In the present embodiment, it is preferable that the other end in the height direction of the rib 42 come into contact with the positive electrode plate 12 and the other surface 40b of the separator faces or comes into contact with the negative electrode plate 13.

A plurality (large number) of mini ribs 43 are formed on both sides in the width direction of the separator 40 in such a way as to extend in the longitudinal direction of the separator 40. The mini rib 43 has a function of enhancing separator strength in order to prevent a corner of an electrode from breaking through the separator and causing a short circuit, when the lead storage battery 1 vibrates in a transverse direction. Incidentally, it is preferable that all of the height, the width and the interval of the mini ribs 43 be smaller than those of the ribs 42. In addition, the cross-sectional shape of the mini rib 43 may be the same as or different from that of the rib 42. It is preferable that the cross-sectional shape of the mini rib 43 be semicircular. In addition, the mini rib 43 does not need to be formed in the separator 40.

The upper limit of the thickness T of the base portion 41 is, for instance, 0.25 mm from the viewpoint of acquiring excellent charge acceptability and discharge characteristics. When the thickness T is 0.25 mm or less, the charge acceptability and the discharge characteristics tend to be enhanced. The upper limit of the thickness T of the base portion 41 is preferably 0.2 mm, and more preferably 0.15 mm from the viewpoint of acquiring further excellent charge acceptability and discharge characteristics. The lower limit of the thickness T of the base portion 41 is not particularly limited, but it may be set at 0.05 mm or 0.1 mm from the viewpoint that the effect of suppressing a short circuit is excellent.

The upper limit of the height H (height in a direction opposing to the base portion 41 and the electrode) of the rib 42 is preferably 1.25 mm, more preferably 1.0 mm, and further preferably 0.75 mm from the viewpoint of acquiring excellent charge acceptability. The lower limit of the height H of the rib 42 is, for instance, 0.3 mm, and it may be 0.4 mm or 0.5 mm from the viewpoint of suppressing oxidative deterioration at a positive electrode.

The thickness (the total of the thickness H of the base portion 41 and the height T of the rib 42) at a portion

where the rib 42 is provided may be, for instance 0.4 to 0.75 mm, 0.4 to 0.7 mm, 0.4 to 0.65 mm, 0.4 to 0.6 mm, 0.5 to 0.75 mm, 0.55 to 0.75 mm, 0.6 to 0.75 mm, or 0.6 to 0.7 mm.

The lower limit of the ratio H/T of the height H of the rib 42 to the thickness T of the base portion 41 may be 2 or more from the viewpoint that a separator is excellent in the oxidation resistance. When the ratio H/T is 2 or more, it is assumed that the oxidation resistance of a separator enhances because a portion which does not come into contact with an electrode (for instance, positive electrode plate 12) can be sufficiently secured.

The lower limit of the ratio H/T is preferably 2.4, and more preferably 3 from the viewpoint that a separator is excellent in the oxidation resistance and the productivity. The upper limit of the ratio H/T may be 6 from the viewpoint that the shape retainability of a rib is excellent and from the viewpoint that the effect of suppressing a short circuit is excellent. When the ratio H/T is 6 or smaller, it is assumed that a short circuit is suppressed since a distance between the positive electrode plate 12 and the negative electrode plate 13 is sufficient. In addition, when the ratio H/T is 6 or smaller, it is assumed that a rib is not damaged when the lead storage battery 1 is assembled, and battery characteristics such as charge acceptability are favorably maintained. The upper limit of the ratio H/T is preferably 5, more preferably 4.5, and further preferably 4 from the viewpoint that the effect of suppressing a short circuit is excellent and from the viewpoint that the shape retainability of a rib is excellent.

In addition, the upper bottom width B of the rib 42 (see Figure 10(b)) is preferably 0.1 to 2 mm, more preferably 0.2 to 1 mm, and further preferably 0.2 to 0.8 mm from the viewpoint that the shape retainability of a rib and the oxidation resistance are excellent. The lower bottom width A of the rib 42 is preferably 0.2 to 4 mm, more preferably 0.3 to 2 mm, and further preferably 0.4 to 1 mm from the viewpoint that the shape retainability of a rib is excellent. The ratio (B/A) of the upper bottom width B to the lower bottom width A is preferably 0.1 to 1, more preferably 0.2 to 0.8, and further preferably 0.3 to 0.6 from the viewpoint that the shape retainability of a rib is excellent.

As shown in Figure 10(a), the separator 40 used to produce the bag-like separator 14 is formed in, for instance, a long-length sheet shape. As shown in Figure 9, the bag-like separator 14 may be produced by cutting the separator 40 into an appropriate length. A method for accommodating an electrode plate (for instance, negative electrode plate 13) in the bag-like separator 14 may be, for instance, the following method. A layered sheet is obtained by cutting the separator 40 to an appropriate length, and folding the cut separator into a U-shape or V-shape about at the middle of the longitudinal direction on a surface with no rib. Subsequently, both side portions of the layered sheet are mechanically sealed, crimped or thermally bonded (for instance, reference numeral 45 in Figure 9 indicates a mechanically sealed portion). The bag-like separator 14 shown in Figure 9 is obtained thereby. Thereafter, an electrode plate (for instance, negative electrode plate 13) is arranged. Further, the electrode plate may be arranged before both side portions of the layered sheet is mechanically sealed, crimped or thermally bonded. From the viewpoint of excellent productivity, it is preferable that the bag-like separator 14 be produced in advance, and thereafter the electrode plate is arranged in the bag-like separator 14.

A polyolefin separator consisting of a microporous sheet (microporous polyethylene sheet) can be used for the separator 40. In addition, a microporous polyethylene sheet, a laminate of glass fiber and acid resistant paper or the like can be used as the separator 40. From the viewpoint of further excellent liquid reduction performance, it is preferable not to solely use a microporous polyethylene sheet, but to make combined use of a nonwoven fabric (a separator consisting of a nonwoven fabric) consisting of at least one fiber selected from the group consisting of glass fiber, polyolefin-based fiber, and fiber made of a material such as pulp, and a microporous polyethylene sheet. In this case, the microporous polyethylene sheet and the nonwoven fabric may be overlapped and used so that a surface opposite to the negative electrode plate 13 of the separator is composed of a nonwoven fabric. Specifically, the negative electrode plate 13 of the lead storage battery and the nonwoven fabric may be brought into contact with each other. The factor for further excellent liquid reduction performance due to the use of the nonwoven fabric is not clear, but it is guessed in the following way. Due to the use of the nonwoven fabric, a gas generated by electrolysis is captured in the nonwoven fabric, allowing the gas to be present in an interface between the electrode material and the electrolytic solution. As a result, the area of the interface between the electrode material and the electrolytic solution decreases, and the overpotential for the gas generation increases. It is assumed that this provides further excellent liquid reduction performance.

The above-described nonwoven fabric may appropriately contain inorganic oxide powder such as silica. In addition, the nonwoven fabric may be solely used as the separator without being combined with the microporous polyethylene sheet.

(Clearance)

A clearance (X-Y) in the liquid type lead storage battery according to the present embodiment is, for instance, -1.1 to 1.2. When the value of X-Y (clearance) is -1.1 or more, a reduction of an electrolytic solution can be sufficiently suppressed and a short circuit tends to be suppressed. In addition, when the value of X-Y (clearance) is 1.2 or less, a reduction of an electrolytic solution tends to be sufficiently suppressed. The clearance (X-Y) is preferably -1.0 or more, and more preferably -0.6 or more from the viewpoint that a reduction of an electrolytic solution can be more sufficiently

suppressed and a short circuit can be more suppressed. The clearance (X-Y) is preferably 1.0 or less, more preferably 0.0 or less, and further preferably less than 0.0 from the viewpoint that a reduction of an electrolytic solution can be more sufficiently suppressed. From these viewpoints, the clearance (X-Y) is preferably -1.0 to 1.0, more preferably -0.6 to 0.0, and further preferably -0.6 or more to less than -0.0.

Widths of a plurality of regions may be the same as or different from each other. The width X of the region 52 can be adjusted by the height of a rib 53 or the like.

In the present specification, in the case that a partition wall 51 has no rib 53, the width X of the region is defined as a shortest distance between opposite partition walls 51 or a shortest distance between the partition wall 51 and an inner wall surface 50 of the battery case 2 opposite to the partition wall 51 (hereinafter, referred to collectively as "distance between walls"). When the partition wall 51 and/or the inner wall surface 50 of the battery case 2 have ribs, the width X of the region is defined as a value obtained by subtracting a height Ha of a highest rib from a distance Xa between walls (see Figure 4). For instance, when heights Ha of respective ribs of opposite two partition walls 51 are the same, the width X of the region is [distance Xa between walls]-(2 × [height Ha of rib]).

Thicknesses Y of a plurality of electrode plate groups are the same or different. The thickness Y of the electrode plate group 11 can be adjusted by the thickness of the current collector, the thickness of the electrode plate, the thickness of the separator and the distance between electrode plates, or the like.

In the present specification, the thickness Y of the electrode plate group means a thickness of an electrode plate group in a state where a compressive force is not applied. The thickness Y of the electrode plate group is defined as an average of thicknesses of the electrode plate group measured at three points in total: in the range r of ±3 mm in the height direction from a boundary between an electrode material filled-portion of an outermost electrode plate of the electrode plate group and an upper side frame portion (upper peripheral portion) of a current collector held by the electrode plate, point p1 at the center in the width direction of the electrode plate group, point p2 positioned at any location right from the center, and point p3 positioned at any location left from the center (see Figure 12). However, in the case of the configuration where a separator is arranged outermost of the electrode plate group, ribs 42 of the separator have no contact with the partition wall 51 of the battery case 2 (or ribs 53 held by the partition wall 51), and thus, the height H of the ribs 42 of the separator is not included in the thickness of the electrode plate group. In other words, in the case of the configuration where a separator is arranged outermost of the electrode plate group, the thickness of the electrode plate group is measured at a position of the base portion 41 of the separator. The thickness Y of the electrode plate group in a liquid type lead storage battery after formation can be measured, for instance, after the electrode plate group after formation is taken out and washed with water for 1 hour; and the electrode plate group from which the electrolytic solution has been removed is dried sufficiently in a system with the absence of oxygen.

In a state where a compressive force is not applied, the electrode plate group 11 may have such a structure that it spreads downward. In other words, when the thickness at a lower end of the electrode plate group 11 is represented by Ya, Ya may be a smaller value than Y.

(Distance between electrode plates)

From the viewpoint that a reduction of an electrolytic solution can be more sufficiently suppressed and from the viewpoint that a short circuit can be suppressed, a distance between the positive electrode plate 12 and the negative electrode plate 13 adjacent to each other (distance between electrode plates) in the electrode plate group in a state where a compressive force is not applied to the electrode plate group 11 is preferably 0.4 mm or more, more preferably 0.5 mm or more, and further preferably 0.55 mm or more. From the viewpoint that a reduction of an electrolytic solution can be more sufficiently suppressed, the distance between electrode plates is preferably 7.5 mm or less, more preferably 0.7 mm or less, further preferably 0.65 mm or less, and further more preferably 0.5 mm or less. From these viewpoints, the distance between electrode plates is preferably 0.4 to 7.5 mm, preferably 0.4 to 0.75 mm, more preferably 0.5 to 0.7 mm, Further preferably 0.55 to 0.65 mm, and further more preferably 0.55 to 0.6 mm.

In the case that the electrode plate and the separator are in contact, all the separators, for instance, are pulled out from the electrode plate group; for all of the pulled-out separators, a thickness of the separator was measured at a location about 8 mm down from an upper end 46 to a lower end 47; and an average of measured values is regarded as the distance between electrode plates. In the case that the separator has ribs, the thickness of the separator is the sum of the thickness T of the base portion and the height H of the rib. An average of thicknesses measured at three points in total on, from a plurality of formed ribs 42, two ribs (42a and 42b in Figure 9) located outermost in the width direction and a rib (42c or 42d in Figure 9) located in the middle between the two ribs is regarded as the thickness of the separator. In the case that the separator has no rib, an average of thicknesses of the electrode plate group measured at three points in total: one point at the center in the width direction of the separator; one point positioned at any location right from the center; and one point positioned at any location left from the center is regarded as the thickness of the separator. In the case that the separator is bag-like, the separator is developed and the thickness thereof is measured. In addition, in a liquid type lead storage battery after formation, the distance between electrode plates in a state where no compressive

force is applied to the electrode plate group 11 can be measured by the above method after the electrode plate group is taken out from the formed battery and washed with water for 1 hour; and the electrode plate group from which the electrolytic solution has been removed is dried sufficiently in a system with the absence of oxygen.

(Electrode material)

Next, the electrode material constituting an electrode material filled-portion of the electrode plate (positive electrode plate 12 and negative electrode plate 13) is explained. The electrode material contains, for instance, an electrode active material. In the present embodiment, the electrode material means an electrode material that is formed (for instance, in a fully charged state). At an unformed stage, a material corresponding to the electrode material contains a substance, which would be the electrode material by formation.

[Positive electrode material]

[Positive electrode active material]

The positive electrode material 23 contains a positive electrode active material. The positive electrode active material can be obtained by forming an unformed positive electrode active material after obtainment of the unformed positive electrode active material by aging and drying, for instance, a positive electrode material paste containing a material (a raw material of the positive electrode active material), which can be a positive electrode active material through formation. The positive electrode active material preferably contains β-lead dioxide (β-$PbO_2$), and also may further contain α-lead dioxide (α-$PbO_2$). The raw material of the positive electrode active material is not limited in particular, and examples thereof include lead powder. Examples of the lead powder include lead powder (for instance, mixture of main component PbO powder and scaly metallic lead, in ball mill type lead powder producing machine) which is produced, for instance, by a ball mill type lead powder producing machine or a Burton-pot type lead powder producing machine. Red lead ($Pb_3O_4$) may be used as the raw material of the positive electrode active material. The unformed positive electrode material preferably contains an unformed positive electrode active material containing a tribasic lead sulfate, as a main component.

[Positive electrode additive]

The positive electrode material 23 may further contain an additive. Examples of the additive include a carbon material (carbonaceous conductive material), and short fiber for reinforcement. Examples of the carbon material include carbon black and graphite. Examples of the carbon black include furnace black (Ketjen black and the like), channel black, acetylene black and thermal black. Examples of the short fiber for reinforcement include acrylic fiber, polyethylene fiber, polypropylene fiber, polyethylene terephthalate fiber and carbon fiber. In addition, carbon fiber described here as the short fiber for reinforcement may be added to the positive electrode material as a carbonaceous material (carbonaceous conductive material).

[Physical properties of positive electrode material]

The lower limit of the specific surface area of the positive electrode material is preferably 3 $m^2/g$, more preferably 4 $m^2/g$, and further preferably 5 $m^2/g$, from the viewpoint of further excellence in the charge acceptability. The upper limit of the specific surface area of the positive electrode material is not limited in particular, but is preferably 15 $m^2/g$, more preferably 12 $m^2/g$, and further preferably 7 $m^2/g$, from the viewpoint of the practical use and from the viewpoint of making the utilization rate excellent. The specific surface described herein of the positive electrode material 23 means a specific surface area of the positive electrode material the (formed) positive electrode material 23. The specific surface area of the positive electrode material 23 can be adjusted, for instance, by a method of adjusting amounts of sulfuric acid and water added when the positive electrode material paste is produced, a method of refining a raw material of the active material at a stage of unformation, and a method of changing a formation condition.

The specific surface area of the positive electrode material 23 can be measured, for instance, by a BET method. The BET method is a method in which an inert gas having a known one molecular size (for instance, nitrogen gas) is adsorbed on a surface of a measurement sample and a surface area is determined from an adsorption amount and an occupying area of the inert gas, and this method is a general measurement method of a specific surface area.

[Negative electrode material]

[Negative electrode active material]

The negative electrode material 33 contains, for instance, a negative electrode active material. The negative electrode active material can be obtained by aging and drying, for instance, a negative electrode material paste containing a material (a raw material of the negative electrode active material), which can be a negative electrode active material through formation, to obtain an unformed negative electrode active material; and then, forming the unformed negative electrode active material. Examples of the negative electrode active material include spongy lead. The spongy lead tends to react with sulfuric acid in an electrolytic solution and to gradually turn into lead sulfate ($PbSO_4$). Examples of the raw material of the negative electrode active material include lead powder. Examples of the lead powder include lead powder (for instance, mixture of main component PbO powder and scaly metallic lead, in a ball mill type lead powder producing machine), which is produced, for instance, by a ball mill type lead powder producing machine or a Burton-pot type lead powder producing machine. The negative electrode material paste is composed of, for instance, basic lead sulfate, metal lead and a low-grade oxide.

[Negative electrode additive]

The negative electrode 33 may further contain an additive. Examples of the additive include: a resin (resin having a sulfone group and/or sulfonate group) which has at least one selected from the group consisting of a sulfone group (sulfonic acid group; sulfo group) and a sulfonate group (for instance, a group formed by replacing hydrogen atom of sulfone group with alkali metal); barium sulfate; a carbon material (carbonaceous conductive material); and a short fiber for reinforcement. From the viewpoint of further enhancement of the charge-discharge performance, the negative electrode material 33 preferably contains a resin having a sulfone group and/or a sulfonate group. In addition, as the short fiber for reinforcement, a carbon fiber is used, and this may be added as the carbon material (carbonaceous conductive material) to the negative electrode material.

[Resin having a sulfone group and/or sulfonate group]

Examples of the resins having a sulfone group and/or sulfonate group include: a bisphenol-based resin having a sulfone group and/or a sulfonate group (hereinafter simply referred to as "bisphenol-based resin"); lignin sulfonic acid; and a lignin sulfonate. Among these, the bisphenol-based resin is preferred from the viewpoint of enhancing the charge acceptability. More preferred is a bisphenol-based resin, which is a condensation product of: a bisphenol-based compound; at least one selected from the group consisting of aminoalkylsulfonic acid, an aminoalkylsulfonic acid derivative, aminoarylsulfonic acid and an aminoarylsulfonic acid derivative; and at least one selected from the group consisting of formaldehyde and a formaldehyde derivative.

It is preferable that the bisphenol-based resin has at least one structural unit, for instance, of a structural unit represented by the following formula (II) and a structural unit represented by the following formula (III).

[Chemical Formula 1]

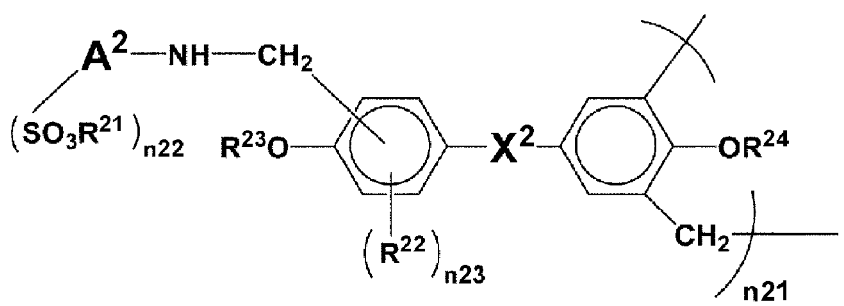

···(II)

[In the formula (II), $X^2$ represents a divalent group; $A^2$ represents an alkylene group having 1 to 4 carbon atoms or an arylene group; $R^{21}$, $R^{23}$ and $R^{24}$ each independently represent an alkali metal or a hydrogen atom; $R^{22}$ represents a methylol group ($-CH_2OH$); n21 represents an integer of 1 to 150; and n22 represents an integer of 1 to 3; and n23 represents 0 or 1. In addition, the hydrogen atom directly bonded to a carbon atom forming a benzene ring may be replaced with an alkyl group having 1 to 5 carbon atoms.]

[Chemical Formula 2]

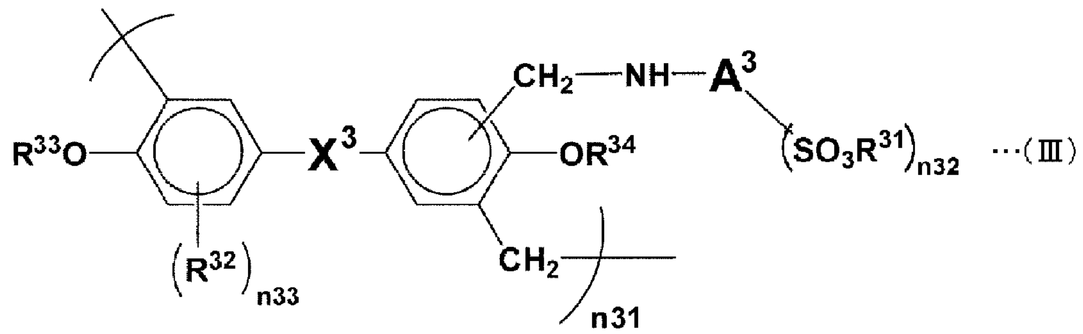

[In the formula (III), $X^3$ represents a divalent group; $A^3$ represents an alkylene group having 1 to 4 carbon atoms or an arylene group; $R^{31}$, $R^{33}$ and $R^{34}$ each independently represent an alkali metal or a hydrogen atom; $R^{32}$ represents a methylol group ($-CH_2OH$); n31 represents an integer of 1 to 150; n32 represents an integer of 1 to 3; and n33 represents 0 or 1. In addition, the hydrogen atom directly bonded to a carbon atom forming a benzene ring may be replaced with an alkyl group having 1 to 5 carbon atoms.]

A ratio between the structural unit represented by the formula (II) and the structural unit represented by the formula (III) is not limited in particular, and can vary depending on the synthetic condition or the like. A resin that has only either one of the structural unit represented by the formula (II) and the structural unit represented by the formula (III) may be used for the bisphenol-based resin.

Examples of the $X^2$ and $X^3$ include an organic group such as an alkylidene group (methylidene group, ethylidene group, isopropylidene group, sec-butylidene group and the like), a cycloalkylidene group (cyclohexylidene group and the like), and a phenylalkylidene group (diphenylmethylidene group, phenylethylidene group and the like); and a sulfonyl group. From the viewpoint of further excellence in the charge acceptability, isopropylidene group ($-C(CH_3)_2-$) is preferred; and from the viewpoint of further excellence in the discharge characteristics, sulfonyl group ($-SO_2-$) is preferred. The $X^2$ and $X^3$ may be substituted by a halogen atom such as a fluorine atom. When the $X^2$ and $X^3$ are a cycloalkylidene group, a hydrocarbon ring may be substituted by an alkyl group or the like.

Examples of $A^2$ and $A^3$ include an alkylene group having 1 to 4 carbon atoms such as a methylene group, an ethylene group, a propylene group and a butylene group; and a divalent arylene group such as a phenylene group and a naphthylene group. The above arylene group may be substituted by an alkyl group or the like.

Examples of the alkali metals of $R^{21}$, $R^{23}$, $R^{24}$, $R^{31}$, $R^{33}$ and $R^{34}$ include sodium and potassium. From the viewpoint of further excellence in the cycle characteristics and the solubility, n21 and n31 are preferably 1 to 150, and more preferably 10 to 150. From the viewpoint of improving the cycle characteristics, the discharge characteristics and the charge acceptability, n 22 and n32 are preferably 1 or 2, and more preferably 1. From the viewpoint of further excellence in the cycle characteristics and the storage stability of a bisphenol-based resin, n23 and n33 is preferably 0 though they vary depending on the production condition.

The weight average molecular weight of the resin (bisphenol-based resin and the like) having a sulfone group and/or sulfonate group is preferably 3000 or more, more preferably 10000 or more, further preferably 20000 or more, and particularly preferably 30000 or more from the viewpoint of easily enhancing the cycle characteristics by suppressing the elution of the resin having a sulfone group and/or sulfonate group from an electrode to an electrolytic solution in a lead storage battery. The weight average molecular weight of the resin having a sulfone group and/or sulfonate group is preferably 200000 or less, more preferably 150000 or less, and further preferably 100000 or less from the viewpoint of easily enhancing the cycle characteristics by suppressing a dispersibility reduction resulting from a reduction in the adsorption to an electrode active material.

The weight average molecular weight of the resin having a sulfone group and/or sulfonate group may be measured, for instance, by gel permeation chromatography (hereinafter referred to as "GPC") under the following conditions.

(GPC condition)

Apparatus: High performance liquid chromatograph LC-2200 Plus (manufactured by JASCO Corporation)

Pump: PU-2080

Differential refractometer: RI-2031
Detector: Ultraviolet visible absorptiometer US-2075 (λ: 254 nm)
Column oven: CO-2065

Column: TSKgel Super AW (4000), TSKgel SuperAW (3000), TSKgel SuperAW (2500) (manufactured by Tosoh Corporation)
Column temperature: 40°C
Eluent: Methanol solution containing LiBr (10 mmol/L) and triethylamine (200 mmol/L)
Flow rate: 0.6 mL/min
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$, and $2.10\times10^4$; manufactured by Tosoh Corporation), diethylene glycol (molecular weight: $1.06\times10^2$; Kishida Chemical Co., Ltd.), and dibutylhydroxytoluene (molecular weight: $2.20\times10^2$; Kishida Chemical Co., Ltd.)

[Carbonaceous material (carbonaceous electro conductive material)]

Incidentally, in a lead storage battery used under a partial state of charge, a phenomenon called as sulfation occurs at an early stage, wherein lead sulfate or an insulator is generated in a negative electrode material at the time of discharging, and the lead sulfate is coarsened along with repetitions of charging and discharging. When sulfation occurs, the charge acceptability and the discharge performance are significantly degraded. Addition of a carbonaceous material to a negative electrode material provides effects of suppressing coarsening of lead sulfate, keeping lead sulfate in a fine state, suppressing lowering of a concentration of lead ions eluted from lead sulfate in an electrolytic solution, and keeping high charge acceptability.

The carbonaceous material (carbonaceous electroconductive material) are preferably selected from the material group consisting of graphite, carbon black, activated carbon, carbon fiber and carbon nanotube. Preferably, graphite is selected; and more preferably scaly graphite is selected. It is preferable that an average primary particle size of scaly graphite be larger than 100 μm.

The scaly graphite used herein indicates one described in JIS M8601 (2005). The electric resistivity of the scaly graphite is 0.02 Ω·cm or less and is smaller in the order of one digit than the electric resistivity (about 0.1 Ω·cm) of carbon blacks such as acetylene black. Thus, the electric resistance of the negative electrode active material can be lowered and the charge acceptability can be further enhanced by using scaly graphite instead of carbon blacks used in conventional lead storage batteries.

An average primary particles size of the scaly graphite used herein is determined in accordance with the laser diffraction/scattering method described in JIS M8511 (2005). The average primary particle size is measured by operations of: using a laser diffraction/scattering type particle size distribution measuring apparatus (manufactured by Nikkiso Co., Ltd.: Microtrac 9220 FRA); charging an appropriate amount of the scaly graphite sample into an aqueous solution which contains 0.5 vol% of polyoxyethylene octylphenyl ether (for instance, Triton X-100 manufactured by Roche Diagnostics K.K.) of a commercially available surface active agent, as a dispersing agent; and irradiating the resultant solution with an ultrasonic wave of 40 W for 180 seconds while stirring the solution. The value of the determined average particle size (median diameter: D50) is defined as the average primary particle size.

The content of the carbonaceous material (carbonaceous electroconductive material) is preferably 0.1 to 3 parts by mass with respect to 100 parts by mass of the negative electrode active material (spongy metallic lead) in a fully charged state.

Examples of the short fiber for reinforcement include acrylic fiber, polyethylene fiber, polypropylene fiber, polyethylene terephthalate fiber and carbon fiber.

(Mass ratio of positive electrode material to negative electrode material)

The mass ratio of a positive electrode material to a negative electrode material (positive electrode material/negative electrode material) is preferably 0.9 or more, more preferably 1 or more, and further preferably 1.05 or more from the viewpoint that sufficient battery capacity can be easily obtained and high charge acceptability can be easily obtained. The mass ratio of a positive electrode material to a negative electrode material is preferably 1.6 or less, more preferably 1.5 or less, and further preferably 1.4 or less from the viewpoint that sufficient battery capacity can be easily obtained. The mass ratio of a positive electrode material to a negative electrode material may be 1.3 or less. The mass ratio of a positive electrode material to a negative electrode material is preferably 0.9 to 1.6, more preferably 1 to 1.5, and further preferably 1.05 to 1.4 from the viewpoint that sufficient battery capacity can be easily obtained and high charge acceptability can be easily obtained. The mass ratio of a positive electrode material to a negative electrode material may be 1.05 to 1.3. The mass ratio of a positive electrode material to a negative electrode material is a mass ratio of a negative

electrode material and a positive electrode material after formation.

(Electrolytic solution)

Next, the electrolytic solution accommodated in the battery case 2 is explained. The electrolytic solution contains, for instance, sulfuric acid. The electrolytic solution may contain sodium ions and/or aluminum ions. From the viewpoint that liquid reduction performance is further excellent and a short circuit can be suppressed at the time of overdischarge, the electrolytic solution preferably contains aluminum ions. It is inferred that the reason that an electrolytic solution containing aluminum ions suppresses a short circuit at the time of overdischarge is that aluminum hydroxide is easily precipitated in a separator, in particular a surface layer portion and precipitation of lead is suppressed.

When an electrolytic solution contains aluminum ions, a content of aluminum ions in the electrolytic solution, that is a concentration of aluminum ions (aluminum ion concentration) is preferably 0.001 mol/L or more, more preferably 0.03 mol/L or more, and further preferably 0.06 mol/L or more relative to the amount of the electrolytic solution from the viewpoint that the effect to improve liquid reduction performance is prominent. In addition, the concentration of aluminum ions is preferably 0.2 mol/L or less relative to the amount of the electrolytic solution from the viewpoint that the effect to improve liquid reduction performance is prominent. In view of the above, the concentration of aluminum ions is preferably 0.001 to 0.2 mol/L, more preferably 0.03 to 0.2 mol/L, and further preferably 0.06 to 0.2 mol/L. The aluminum ion concentration of the electrolytic solution can be measured, for instance, by ICP emission spectroscopy (high frequency induction coupled plasma emission spectroscopy).

An electrolytic solution containing aluminum ions can be obtained, for instance, by mixing sulfuric acid with aluminum sulfate (for instance, aluminum sulfate powder). The aluminum sulfate to be dissolved in the electrolytic solution can be added as an anhydride or a hydrate.

After formation, a specific gravity of the electrolytic solution (for instance, electrolytic solution containing aluminum ion) may be in the following range. From the viewpoint of suppressing a permeation short circuit and freeze, and the viewpoint that the discharge characteristics are excellent (for instance, viewpoint that low-temperature high-rate discharge performance is excellent), the specific gravity of the electrolytic solution is, for instance, preferably 1.25 or more, more preferably 1.28 or more, further preferably 1.285 or more, and in particular preferably 1.29 or more. From the viewpoint that the charge acceptability enhances and the ISS cycle characteristics further enhances, the specific gravity of the electrolytic solution is preferably 1.33 or less, more preferably 1.32 or less, further preferably 1.315 or less, and in particular preferably 1.31 or less. The value of the specific gravity of the electrolytic solution can be measured, for instance, with a floating type specific gravity meter or a digital specific gravity meter made by Kyoto Electronics Manufacturing Co., Ltd.

<Method for producing lead storage battery>

A method for producing a liquid type lead storage battery according to the present embodiment includes: a step of providing a batter case 2 divided into two or more regions 52 by one or a plurality of partition walls 51; a step of providing two or more electrode plate groups 11 each including a plurality of positive electrode plates 12, a plurality of separators (for instance, bag-like separators 14) and a plurality of negative electrode plates 13; a step of accommodating the electrode plate groups 11 in the regions 2 of the battery case 2; and a step of supplying an electrolytic solution in the battery case 2. In the production method according to the present embodiment, when the electrode plate groups 11 are accommodated in the regions of the battery case 2, the electrode plate groups are pressed into the regions 52 while a compressive force in a thickness direction of the electrode plate groups 11 is given to the electrode plate groups from the partition walls 51.

The positive electrode plates 12 and the negative electrode plates 13 at the step of providing two or more electrode plate groups 11 are unformed. The step of providing two or more electrode plate groups 11 may have, for instance, an electrode plate production step of obtaining unformed electrode plates (unformed positive electrode plates and unformed negative electrode plates), and a step of obtaining the electrode plate groups 11 by alternately stacking the unformed positive electrode plates and bag-like separators 14 in which unformed negative electrode plates obtained at the electrode plate production step are arranged (see Figure 4), and connecting (welding or the like) current collecting portions of electrodes having the same polarity by a strap.

In the electrode plate production step, for instance, an unformed electrode plate is obtained by filling a current collector (for instance, a current collector grid such as a cast grid body or an expanded grid body) with an electrode material paste (positive electrode material paste and negative electrode material paste), and then performing aging and drying. The positive electrode material paste contains, for instance, a raw material (lead powder and the like) of a positive electrode active material, and may further contain another additive. The negative electrode material paste contains a raw material (lead powder and the like) of a negative electrode active material, and may further contain another additive (for instance, a dispersant). It is preferable for the negative electrode material paste to contain a resin (bisphenol-based

resin and the like) having a sulfone group and/or sulfonate group, as a dispersant.

The paste of the positive electrode material can be obtained, for instance, according to the following method. Firstly, the additive (short fiber for reinforcement or the like) and water are added to the raw material of the positive electrode active material. Next, dilute sulfuric acid is added thereto, then the mixture is kneaded, and the paste of the positive electrode material is obtained. When the paste of the positive electrode material is prepared, red lead ($Pb_3O_4$) may be used as the raw material of the positive electrode active material from the viewpoint of enabling a formation time to be reduced. An unformed positive electrode plate can be obtained by operations of: filling the positive electrode current collector 21 with this positive electrode material paste, and then aging and drying the resultant current collector.

In the case that a short fiber for reinforcement is used in the paste of the positive electrode material, an amount of the short fiber for reinforcement to be blended is preferably 0.005 to 0.3 mass%, and more preferably 0.05 to 0.3 mass%, based on the total mass of the raw material (lead powder or the like) of the positive electrode active material.

Conditions of an atmosphere of a temperature of 35 to 85°C and a humidity of 50 to 98 RH% for 15 to 60 hours are preferable as aging conditions for obtaining the unformed positive electrode plate. Conditions of a temperature of 45 to 80°C for 15 to 30 hours are preferable as drying conditions.

The paste of the negative electrode material can be obtained, for instance, according to the following method. Firstly, a mixture is obtained by operations of: adding additives (a resin having a sulfone group and/or sulfonate group, a short fiber for reinforcement, barium sulfate, and the like) to the raw material of the negative electrode active material; and performing dry-mixing. Then, the paste of the negative electrode material is obtained by operations of adding sulfuric acid (dilute sulfuric acid or the like) and a solvent (water such as ion-exchanged water, organic solvent or the like) to this mixture; and performing kneading. An unformed negative electrode plate can be obtained by filling the negative electrode current collector 31 (for instance, a current collector grid such as a cast grid body or an expanded grid body) with this paste of the negative electrode material, and then aging and drying the resultant current collector.

In the case that the resin (bisphenol-based resin and the like) having a sulfone group and/or sulfonate group, the carbonaceous material, the short fiber for reinforcement or barium sulfate is used, the amount of each component to be blended is preferably in the following range. The amount of the resin having a sulfone group and/or sulfonate group to be blended is preferably 0.01 to 2.0 mass%, more preferably 0.05 to 1.0 mass%, more preferably 0.05 to 1.0 mass%, and further preferably 0.1 to 0.5 mass% in terms of the solid content of the resin, based on the total mass of the raw material (lead powder or the like) of the negative electrode active material. The amount of the carbonaceous material to be blended is preferably 0.1 to 3 mass%, and more preferably 0.2 to 1.4 mass% based on the total mass of the raw material (lead powder or the like) of the negative electrode active material. The amount of the short fiber for reinforcement to be blended is preferably 0.05 to 0.1 mass% based on the total mass of the raw material (lead powder or the like) of the negative electrode active material. The amount of barium sulfate to be blended is preferably 0.01 to 2.0 mass%, and more preferably 0.01 to 1.0 mass% based on the total mass of the raw material (lead powder or the like) of the negative electrode active material.

As aging conditions for obtaining the unformed negative electrode plate, preferable are an atmosphere at a temperature of 45 to 65°C and a humidity of 70 to 98 RH%, and a period of 15 to 30 hours. The drying conditions are preferably a temperature of 45 to 60°C and a period of 15 to 30 hours.

In the step of accommodating the electrode plate group 11 in the region 52 of the battery case 2, as shown in Figure 13, the electrode plate group 11 is accommodated in the batter case 2 by pressing the electrode plate group 11 into the region 52 of the battery case 2 while giving a compressive force in a thickness direction of the electrode plate group 11 to the electrode plate group from the partition walls 51. An unformed battery is produced thereby. In the case that a surface opposite to the partition wall 51 is an inner wall surface 50 of the battery case 2, a compressive force is given in a thickness direction of the electrode plate group 11 from the partition wall 51 and the inner wall surface 50 of the battery case 2.

In the present embodiment, from the viewpoint of making it easy to accommodate the electrode plate group 11 in the region 52 of the battery case 2, a clearance (X-Y) is set to preferably -1.1 or more, more preferably -1.0 or more, and further preferably -0.6 or more. In addition, from the viewpoint of making it easy to set a distance between electrode plates exactly, the clearance (X-Y) is set preferably 1.2 or less, more preferably 1.0 or less, further preferably 0.0 or less, and in particular preferably less than 0.0. From these viewpoints, the clearance (X-Y) is set to preferably -1.1- to 1.2, more preferably -1.0 to 1.0, further preferably -0.6 to 0.0, and in particular preferably -0.6 or more and less than 0.0. In accordance with the knowledge of the present inventors, when the clearance (X-Y) is 1.16 or more, the electrode plate group 11 can be brought down into the region 52 of the battery case 2 by its own weight without pressing the electrode plate group 11 thereinto; however, when the clearance (X-Y) is lower than 1.16, it is necessary to apply a pressure F to the electrode plate group 11 to press the electrode plate group 11 into the region 52 of the battery case 2. It is not clear why it is necessary to press the electrode plate group 11 into the region 52 of the battery case 2 when the clearance (X-Y) is a positive value; however, as shown in Figure 13(a), it is inferred that the electrode plate group 11 has such a structure that it spreads downward.

In the present embodiment, a compressive force is given in a thickness direction of the electrode plate group

11 depending on the above clearance; and thus, it is necessary to press the electrode plate group 11 into the region 52 of the battery case 2 by giving a pressure F to an upper part of the electrode plate group 11.

In the step of supplying the electrolytic solution in the battery case 2, the electrolytic solution is supplied (poured) in the battery case 2 for the unformed battery obtained by the step of accommodating the electrode plate group 11 in the region 52 of the battery case.

The production method according to the present embodiment may have further a step of forming the unformed battery after the supply of the electrolytic solution. That step may be, for instance, a step of forming the battery case by passing a direct current after the supply of the electrolytic solution. After formation, the specific gravity of the electrolytic solution may be adjusted to an appropriate specific gravity. A formed liquid type lead storage battery is obtained thereby.

The formation conditions and the specific gravity of the sulfuric acid can be adjusted according to properties of the electrode active material. In addition, the formation treatment is not limited to being carried out after the obtainment of the unformed battery, but it may be carried out after aging and drying in the electrode production step (tank formation).

**Examples**

Hereinafter, the present disclosure is specifically described by examples. However, the present disclosure is not limited to the following examples.

(Example 1)

<Production of lead storage battery>

[Provision of battery case]

A battery case (a length in a thickness direction of an interior: 3.5 cm), which consisting of a box with an upper face opened and an interior of which is divided into 6 regions by partition walls was provided. The partition walls and inner wall surfaces of the battery case had a flat portion, a plurality of rib portions protruding from the flat portion and extending in a height direction of the battery case, and an inclined portion provided at an entry side of the region from the flat portion to the rib portion; and a height of the rib was 1.4 mm. In addition, a width X (unit: mm) of each region was 32.2. In the present embodiment, the width X of the region was measured at a height of $\pm$3 mm from a boundary between an electrode material filled-portion and an upper peripheral portion of an outermost electrode plate of an electrode plate group 11 accommodated in the battery case.

[Production of positive electrode plate]

Lead powder and red lead ($Pb_3O_4$) were used as a raw material of a positive electrode active material (lead powder:red lead = 96:4 (mass ratio)). The raw materials of the positive electrode active material, 0.07 mass% of short fiber for reinforcement (acrylic fiber) based on the total mass of the raw materials of the positive electrode active material, and water were mixed and kneaded. Subsequently, the kneading was performed while dilute sulfuric acid (specific gravity of 1.280, conversion at 20°C and the same applies hereinafter) was added little by little to produce a positive electrode material paste. An expanded grid body (a current collector) which was produced by subjecting a rolled sheet consisting of a lead alloy to expand working was filled with the positive electrode material paste. Then, the current collector filled with the positive electrode material paste was aged in an atmosphere of a temperature of 50°C and a humidity of 98% for 24 hours. Thereafter, drying was performed to produce an unformed positive electrode plate.

[Production of negative electrode plate]

Lead powder was used as a raw material of a negative electrode active material. A mixture containing 0.2 mass% of a bisphenol-based resin (in terms of solid content, manufactured Nippon Paper Industries Co., Ltd., trade name: Bisperse P215), 0.1 mass% of short fiber for reinforcement (acrylic fiber), 1.0 mass% of barium sulfate, and 2.0 mass% of carbonaceous material (scaly graphite, average particle size (median diameter: D50):180 μm) was added to the lead powder; and then, dry-mixing was performed (where the above mixed amounts were an amount based on the total mass of the raw material of the negative electrode active material). A weight average molecular weight of the bisphenol-based resin was measured by GPC under the above-described conditions and found to be 53900. A particle size of the scaly graphite was determined in accordance with a laser diffraction/scattering method described in JIS M8511 (2005). Next, 10 mass% (a mixed amount based on the total mass of the raw material of the negative electrode active material) of water was added and kneading was performed. Subsequently, the kneading was performed while 9.5 mass% (a mixed amount based on the total mass of the raw material of the negative electrode active material) of

dilute sulfuric acid (specific gravity of 1.280) was added little by little to produce a negative electrode material paste. Subsequently, an expanded grid body (current collector) which was produced by subjecting a rolled sheet consisting of a lead alloy to expand working was filled with the negative electrode material paste. Then, the current collector filled with the negative electrode material paste was aged in an atmosphere of a temperature of 50°C and a humidity of 98% for 24 hours. Thereafter, drying was performed to produce an unformed negative electrode plate.

[Production of bag-like separator]

First, a separator (made of polyethylene, a thickness T of a base portion: 0.2 mm, a height H of rib: 0.55 mm) with a predetermined length, which consists of a microporous sheet and has a plurality of linear ribs on one surface was provided; it was folded in a U-shape about at the center in a longitudinal direction of a surface of the separator with no ribs provided thereon; and a layered sheet was obtained. Subsequently, both side portions of the layered sheet were mechanically sealed and a bag-like separator was obtained.

[Production of electrode plate group]

An unformed negative electrode plate was arranged in a bag-like separator. 8 bag-like separators having an unformed negative electrode plate packed therein and 7 unformed positive electrode plates were alternately stacked. Subsequently, ear portions of electrode plates with the same polarity were welded to each other by a cast-on strap (COS) method to produce an electrode plate group. A strap portion was formed of a Pb-Sb-based alloy, and a content of Sb was set to 2.9 mass% relative to the mass of the strap portion. A thickness Y (unit: mm) of the electrode plate group was 31.2.

[Preparation of electrolytic solution]

An electrolytic solution was prepared by adding sodium sulfate to diluted sulfuric acid so that the sodium ion concentration in the electrolytic solution after formation was 0.1 mol/L. Incidentally, the specific gravity of the electrolytic solution was determined so that the specific gravity of the electrolytic solution after formation was 1.290.

[Assembly of battery]

The electrode plate group was pressed into and accommodated in the region of the battery case, and a 12-V battery (corresponding to D23 size specified in JIS D 5301) was assembled. The electrolytic solution was poured in this battery, and thereafter, formation was carried out in a water bath at 35°C under conditions of a passing current of 18.6 A and a period of 18 hours and a liquid type lead storage battery was obtained. Various physical property values measured after formation are shown below. An average particle size of the positive electrode active material was 0.8 μm. A specific surface area of the positive electrode material was 6 $m^2$/g. An average particle size of the negative electrode active material was 1.2 μm. A specific surface area of the negative electrode material was 1.0 $m^2$/g. A mass ratio (positive electrode material/negative electrode material) of the positive electrode material to the negative electrode material was 1.4. In addition, a specific gravity of the electrolytic solution was 1.290. A thickness Y (unit: mm) of the electrode plate group was 31.2. Since a width X of the region of the battery case was 32.2, the clearance (X-Y) was 1.0. In the present example, the thickness Y (unit: mm) of the electrode plate group after formation was measured after the electrode plate group was taken out from the battery after formation and washed with water for 1 hour, and the electrode plate group from which the electrolytic solution was removed was dried sufficiently in a system with the absence of oxygen.

[Measurement of distance between electrode plates]

A distance between electrode plates in the electrode plate group taken out from a battery after formation was measured by the following method. First, the electrode plate group was taken out from the battery after formation and washed with water for 1 hour, and the electrode plate group from which the electrolytic solution was removed was dried sufficiently in a system with the absence of oxygen. Next, all the separators were pulled out from the dried electrode plate group. For all of the pulled-out separators, a thickness of the separator was measured at a location about 8 mm down from an upper end to a lower end; and an average of measured values was regarded as the distance between electrode plates. Measurement of the thickness of the separator was carried out by measuring thicknesses at three points in total on, from a plurality of formed ribs, two ribs located outermost in the width direction and a rib located in the middle between the two ribs, and an average of the measured thicknesses was regarded as the thickness of the separator. The distance between electrode plates in the electrode plate group taken out from the battery after formation was 0.75 mm.

(Example 2)

A liquid type lead storage battery was produced in the same manner as Example 1 except that a battery case having a region with a width X (unit: mm) of 30.9 was used. The clearance (X-Y) after formation was -0.3, and the distance between electrode plates in the electrode plate groups taken out from the battery after formation was 0.75 mm.

(Example 3)

A liquid type lead storage battery was produced in the same manner as Example 1 except that a battery case having a region with a width X (unit: mm) of 30.1 was used. The clearance (X-Y) after formation was -1.1, and the distance between electrode plates in the electrode plate groups taken out from the battery after formation was 0.75 mm.

(Example 4)

A liquid type lead storage battery was produced in the same manner as Example 1 except that a battery case having a region with a width X (unit: mm) of 30.1 was used and a bag-like separator produced by use of a separator having ribs with a height of 0.4 mm was used. The thickness Y (unit: mm) of the electrode plate group after formation was 29.1, the clearance (X-Y) after formation was 1.0, and the distance between electrode plates in the electrode plate groups taken out from the battery after formation was 0.6 mm.

(Example 5)

A liquid type lead storage battery was produced in the same manner as Example 1 except that a battery case having a region with a width X (unit: mm) of 27.3 was used and a bag-like separator produced by use of a separator having ribs with a height of 0.2 mm was used. The thickness Y (unit: mm) of the electrode plate group after formation was 26.3, the clearance (X-Y) after formation was 1.0, and the distance between electrode plates in the electrode plate groups taken out from the battery after formation was 0.4 mm.

(Example 6)

An electrolytic solution was prepared by dissolving aluminum sulfate to dilute sulfuric acid so that the aluminum ion concentration in the electrolytic solution after formation was 0.06 mol/L. A liquid type lead storage battery was produced in the same manner as Example 1 except that this electrolytic solution was used.

(Example 7)

An electrolytic solution was prepared by dissolving aluminum sulfate to dilute sulfuric acid so that the aluminum ion concentration in the electrolytic solution after formation was 0.12 mol/L. A liquid type lead storage battery was produced in the same manner as Example 1 except that this electrolytic solution was used.

(Example 8)

An electrolytic solution was prepared by dissolving aluminum sulfate to dilute sulfuric acid so that the aluminum ion concentration in the electrolytic solution after formation was 0.18 mol/L. A liquid type lead storage battery was produced in the same manner as Example 1 except that this electrolytic solution was used.

(Example 9)

[Production of negative electrode current collector]

A sheet-shaped lead-calcium-tin alloy (calcium content: 0.05 mass% and tin content: 0.5 mass%) having a thickness of 12 mm was prepared as a substrate, and a tin (Sn) sheet having a thickness of 0.2 mm was prepared as a metal sheet for forming a surface layer. A rolled sheet having a thickness of 0.8 mm was produced by operations of: overlapping a Sn sheet on both surfaces of the lead-calcium-tin alloy so that a surface layer consisting of Sn was provided at a position of an ear portion of the negative electrode current collector, and rolling the resultant product with a rolling roller. The thickness of the layer formed on the rolled sheet was about 13 μm, which became the surface layer (surface layer consisting of Sn).

The rolled sheet was expanded by a reciprocating-type expander, while the position of the rolled sheet was

adjusted so that the surface layer consisting of Sn was provided at the position of the ear portion of the negative electrode current collector. Thereby, the negative electrode current collector was produced in which the surface layer (thickness: 13 μm) consisting of Sn was formed on the surface of the ear portion. A liquid type lead storage battery was produced in the same manner as Example 1 except that this negative electrode current collector was used.

(Example 10)

A liquid type lead storage battery was produced in the same manner as Example 1 except that: a battery case having a region with a width X (unit: mm) of 33.1 mm was used; a bag-like separator produced by use of a separator having ribs with a height of 0.5 mm was used; and in assembling a battery, a nonwoven fabric (thickness: 0.2 mm, fiber composition: glass fiber) manufactured by Japan Vilene Company, Ltd. was arranged between the negative electrode plate and the separator so that a surface opposite to the negative electrode plate of the separator was composed of the nonwoven fabric. The thickness Y (unit: mm) of the electrode plate group after formation was 33.7, the clearance (X-Y) after formation was -0.6, and the distance between electrode plates in the electrode plate groups taken out of the battery after formation was 0.7 mm.

(Comparative Example 1)

A liquid type lead storage battery was produced in the same manner as Example 1 except that a battery case having a region with a width X (unit: mm) of 32.5 was used. The clearance (X-Y) after formation was 1.3, and the distance between electrode plates in the electrode plate groups taken from the battery after formation was 0.75 mm.

<Evaluation of battery characteristics>

Liquid type lead storage batteries produced in Examples and Comparative Example were evaluated by the following methods in terms of the liquid reduction performance, the 5-hour rate capacity, the charge acceptability, the cold cranking ampere and the low-temperature high-rate discharge performance. Results are shown in Table 1.

(Evaluation of liquid reduction performance)

The liquid reduction performance was evaluated in the following way. The battery temperature was adjusted to 60°C, and the constant voltage charging was carried out at 14.4 V for 42 days (1008 hours). The liquid reduction amount was defined to be a difference between: a battery weight right before the constant voltage charging was carried out and after the battery temperature reached 60°C; and the battery weight right after 42-day constant voltage charging ended, and the liquid reduction performance was evaluated by a procedure of comparing the amount. The liquid reduction performance was relatively evaluated assuming that the measurement result of Comparative Example 1 was 100.

(Evaluation of 5-hour rate capacity)

A produced liquid type lead storage battery was subjected to constant current discharging at 25°C and 10.4 A, and a 5-hour rate capacity was calculated from a discharge duration until a cell voltage became lower than 10.5 V. The 5-hour rate capacity was relatively evaluated assuming the measurement result of Comparative Example 1 was 100.

(Evaluation of charge acceptability)

A produced liquid type lead storage battery was subjected to constant current discharging at 25°C and 3.1 A for 2 hours, and was left for 24 hours. Thereafter, the battery was subjected to constant voltage charging at 14 V under a limited current of 200 A for 60 seconds, and a current value was measured at 5 seconds from the start of charging. The charge acceptability was evaluated by comparison of this measured value. The charge acceptability was relatively evaluated assuming that the measurement result of Comparative Example 1 was 100.

(Evaluation of cold cranking ampere)

For a produced liquid type lead storage battery, the battery temperature was adjusted to -18°C, and the constant current discharging was carried out for 30 seconds. During the discharging, a discharge current value was measured at the time when a cell voltage fell below 7.2 V. This measured value was taken as a cold cranking ampere value. The cold cranking ampere was relatively evaluated assuming that the measurement result of Comparative Example 1 was 100.

(Low-temperature high-rate discharge performance)

For a produced liquid type lead storage battery, the battery temperature was adjusted to -15°C and constant current discharging was carried out at 300 A. A duration (discharge duration) until a cell voltage fell below 6.0 V from the start of discharging was measured. The low-temperature high-rate discharge performance was evaluated by a procedure of comparing this discharge duration. The low-temperature high-rate discharge performance was relatively evaluated assuming that the measurement result of Comparative Example 1 was 100.

[Table 1]

| Item | Clearance (X-Y) | Distance between electrode plates (mm) | Composition of surface layer | Sodium ion concentration (mol/L) | Aluminum ion concentration (mol/L) | Thickness of nonwoven fabric (mm) | Liquid reduction performance | 5-hour rate capacity | Charge acceptability | Cold cranking ampere | Low-temperature high-rate discharge performance |
|---|---|---|---|---|---|---|---|---|---|---|---|
| Example 1 | 1.0 | 0.75 | - | 0.1 | - | - | 96 | 100 | 99 | 100 | 99 |
| Example 2 | -0.3 | 0.75 | - | 0.1 | - | - | 91 | 95 | 97 | 104 | 106 |
| Example 3 | -1.1 | 0.75 | - | 0.1 | - | - | 87 | 95 | 99 | 107 | 110 |
| Example 4 | 1.0 | 0.6 | - | 0.1 | - | - | 90 | 96 | 99 | 105 | 114 |
| Example 5 | 1.0 | 0.4 | - | 0.1 | - | - | 84 | 85 | 96 | 106 | 103 |
| Example 6 | 1.0 | 0.75 | - | - | 0.06 | - | 92 | 98 | 114 | 98 | 96 |
| Example 7 | 1.0 | 0.75 | - | - | 0.12 | - | 87 | 95 | 120 | 95 | 89 |
| Example 8 | 1.0 | 0.75 | - | - | 0.18 | - | 78 | 96 | 123 | 91 | 87 |
| Example 9 | 1.0 | 0.75 | Sn | 0.1 | - | - | 89 | 100 | 100 | 100 | 100 |
| Example 10 | -0.6 | 0.7 | - | 0.1 | - | 0.2 | 51 | 88 | 90 | 92 | 95 |
| Comparative Example 1 | 1.3 | 0.75 | - | 0.1 | - | - | 100 | 100 | 100 | 100 | 100 |

## Reference Signs List

1 ... Lead storage battery, 2 ... Battery case, 11 ... Electrode plate group, 12 ... Positive electrode plate, 14 ... Bag-like separator, 15 ... Positive electrode side strap, 16 ... Negative electrode side strap, 21 ... Positive electrode current collector, 22 ... Current collecting portion of positive electrode (positive electrode ear portion), 23 ... Positive electrode material, 24 ... Positive electrode material filled portion, 31 ... Negative electrode current collector, 32 ... Current collecting portion of negative electrode (negative electrode ear portion), 32a ... Surface layer, 33 ... Negative electrode material, 34 ... Negative electrode material filled portion, 40 ... Separator, 42 ... Rib, 45 ... Mechanical sealed portion, 50 ... Inner wall surface, 51 ... Partition wall, 52 ... Region (cell chamber), 53 ... Rib, 54 ... Flat portion, 55 ... Inclined portion, X ... Width of region, Y ... Height of electrode plate group

## Claims

**1.** A method for producing a liquid type lead storage battery comprising:

a step of providing a battery case divided into two or more regions by one or a plurality of partition walls;
a step of providing two or more electrode plate groups each comprising a plurality of positive electrode plates, a plurality of separators and a plurality of negative electrode plates;
a step of accommodating the electrode plate groups in the regions of the battery case; and
a step of supplying an electrolytic solution in the battery case,
wherein when the electrode plate groups are accommodated in the regions of the battery case, the electrode plate groups are pressed into the regions while a compressive force in a thickness direction of the electrode plate groups is given to the electrode plate groups from the partition walls.

**2.** The method for producing a liquid type lead storage battery according to claim 1, wherein when a width of each of the regions is represented by X mm and a thickness of each of the electrode plate groups is represented by Y mm, X and Y satisfy the following conditional expression:

$$-1.1 \leq X\text{-}Y \leq 1.2.$$

**3.** The method for producing a liquid type lead storage battery according to claim 1 or 2, wherein
the separator comprises a plurality of ribs extending in a longitudinal direction of the separator; and
a thickness of the separator at a portion where the ribs are provided is 0.4 to 0.75 mm.

**4.** The method for producing a liquid type lead storage battery according to any one of claims 1 to 3, wherein a distance between the positive electrode plate and the negative electrode plate adjacent to each other is 0.4 to 0.75 mm.

**5.** The method for producing a liquid type lead storage battery according to any one of claims 1 to 4, wherein the electrolytic solution comprises aluminum ions at a concentration of 0.001 to 0.2 mol/L.

**6.** The method for producing a liquid type lead storage battery according to any one of claims 1 to 5, wherein
the negative electrode plate comprises: a negative electrode material filled-portion comprised of a negative electrode material; and a negative electrode current collector comprising a negative electrode material supporting portion supporting the negative electrode material filled-portion, an upper peripheral portion formed into a belt shape on an upper side of the negative electrode material supporting portion, and an ear portion provided on the upper peripheral portion; and
a surface of the ear portion is comprised of a surface layer containing Sn or a Sn alloy.

**7.** The method for producing a liquid type lead storage battery according to any one of claims 1 to 6, wherein the partition wall comprises a flat portion, a plurality of rib portions protruding from the flat portion and extending in a height direction of the battery case, and an inclined portion provided at an entry side of the region from the flat portion to the rib portion.

**8.** A liquid type lead storage battery comprising:

a battery case divided into two or more regions by one or a plurality of partition walls;
electrode plate groups each accommodated in the two or more regions, the electrode plate group comprising a plurality of positive electrode plates, a plurality of separators and a plurality of negative electrode plates; and
an electrolytic solution accommodated in the battery case,
wherein when a width of each of the regions is represented by X mm and a thickness of each of the electrode plate groups is represented by Y mm, X and Y satisfy the following conditional expression:

$$-1.1 \leq X\text{-}Y \leq 1.2.$$

**9.** The liquid type lead storage battery according to claim 8, wherein
the separator comprises a plurality of ribs extending in a longitudinal direction of the separator; and
a thickness of the separator at a portion where the ribs are provided is 0.4 to 0.75 mm.

**10.** The liquid type lead storage battery according to claim 8 or 9, wherein a distance between the positive electrode plate and the negative electrode plate adjacent to each other is 0.4 to 0.75 mm.

**11.** The liquid type lead storage battery according to any one of claims 8 to 10, wherein the electrolytic solution comprises aluminum ions at a concentration of 0.001 to 0.2 mol/L.

**12.** The liquid type lead storage battery according to any one of claims 8 to 11, wherein
the negative electrode plate comprises a negative electrode material filled-portion comprised of a negative electrode material; and a negative electrode current collector comprising a negative electrode material supporting portion supporting the negative electrode material filled-portion, an upper peripheral portion formed into a belt shape on an upper side of the negative electrode material supporting portion, and an ear portion provided on the upper peripheral portion; and
a surface of the ear portion is comprised of a surface layer containing Sn or a Sn alloy.

**13.** The liquid type lead storage battery according to any one of claims 8 to 12, wherein the partition wall comprises a flat portion, a plurality of rib portions protruding from the flat portion and extending in a height direction of the battery case, and an inclined portion provided at an entry side of the region from the flat portion to the rib portion.

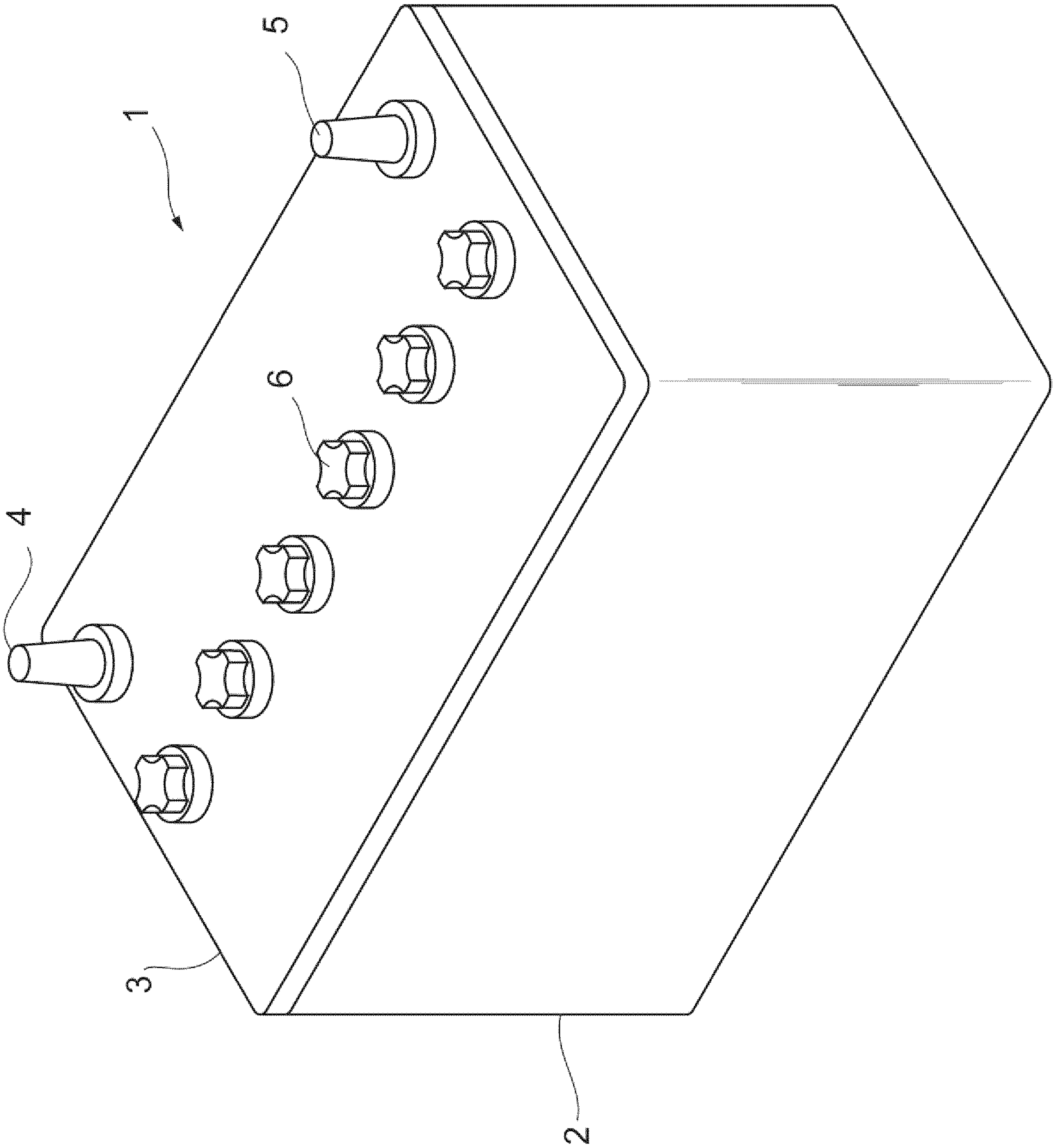


Fig.1

*Fig.2*

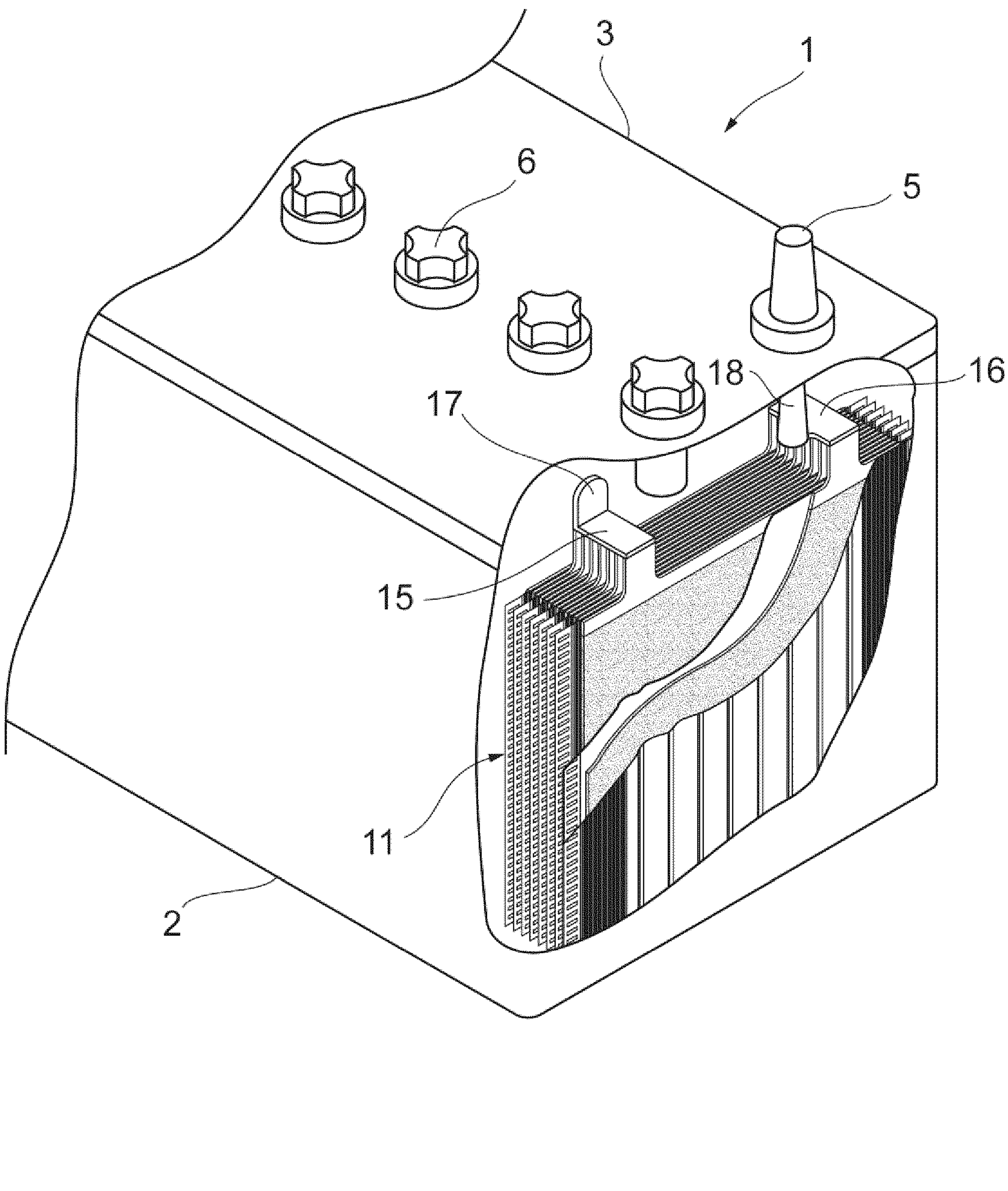

Fig.3

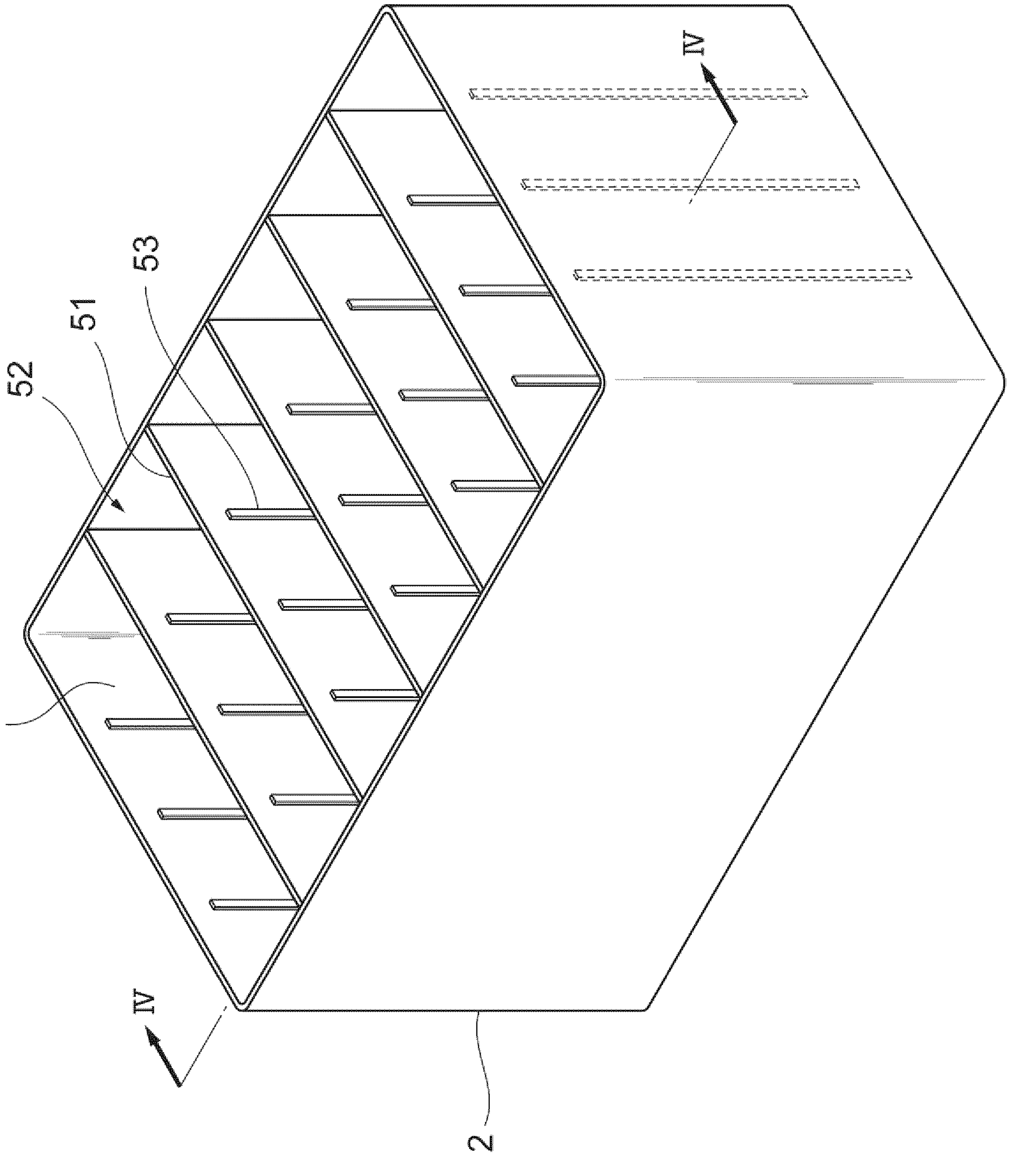

Fig.4

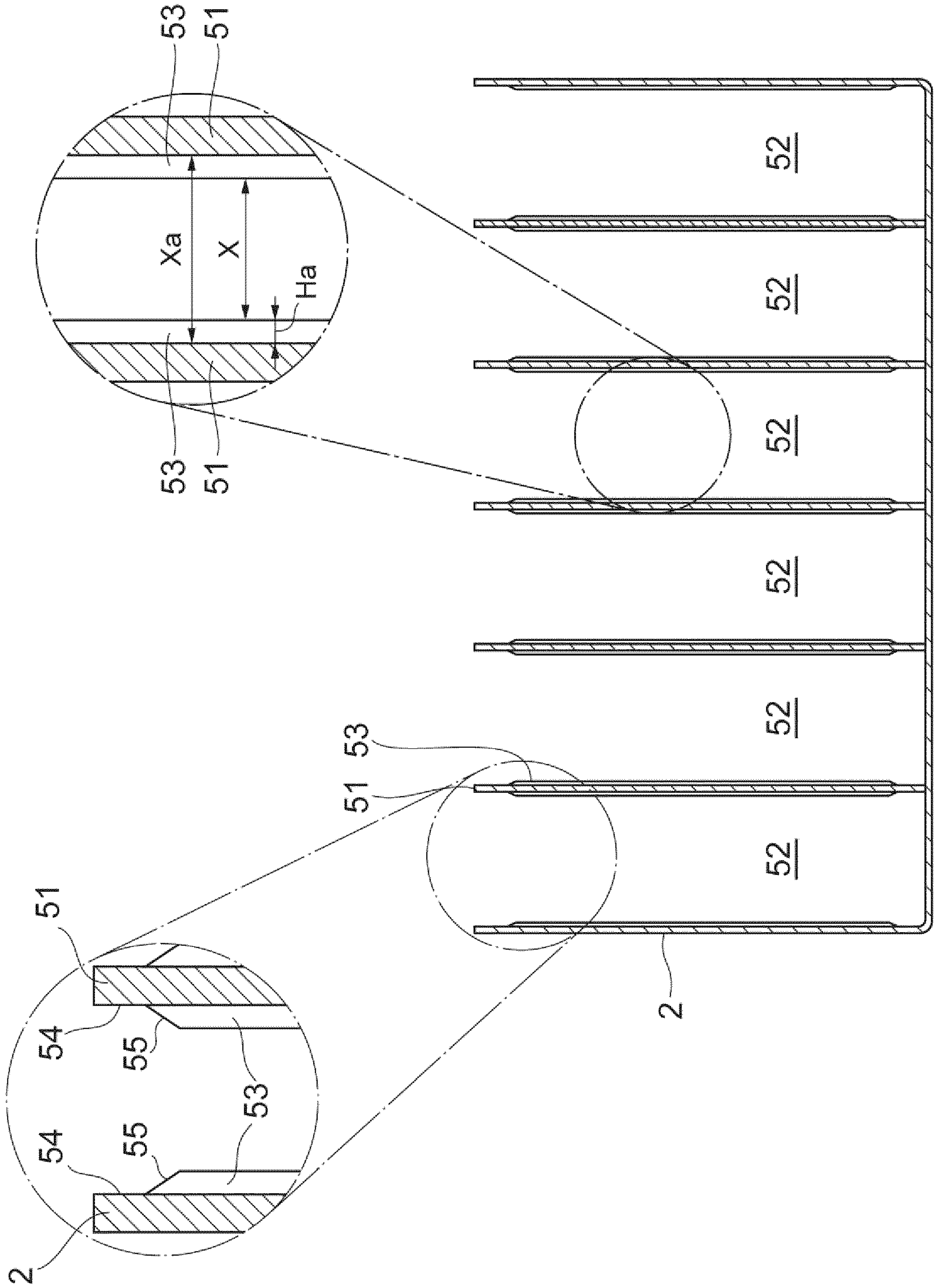

*Fig.5*

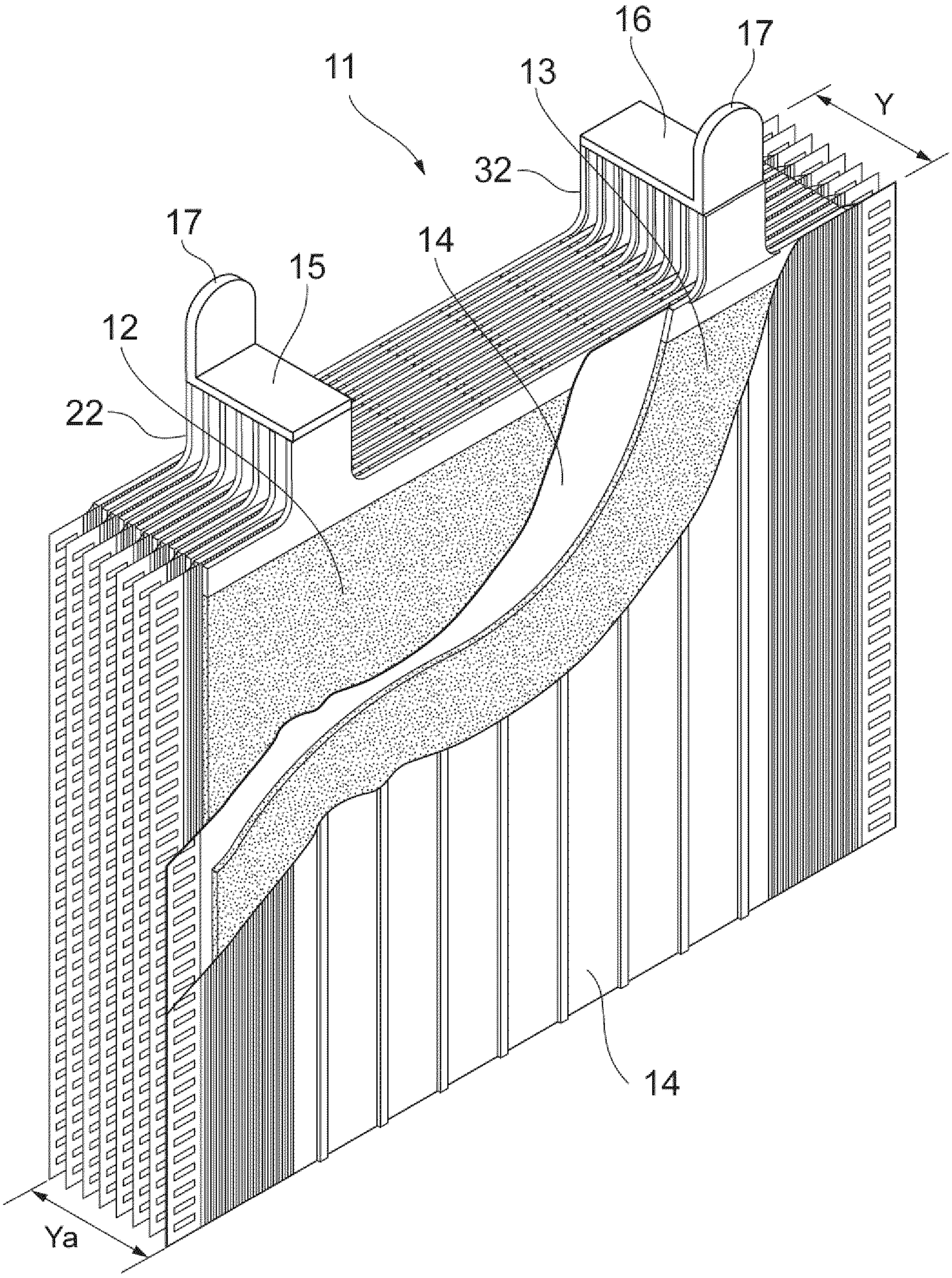

Fig.6

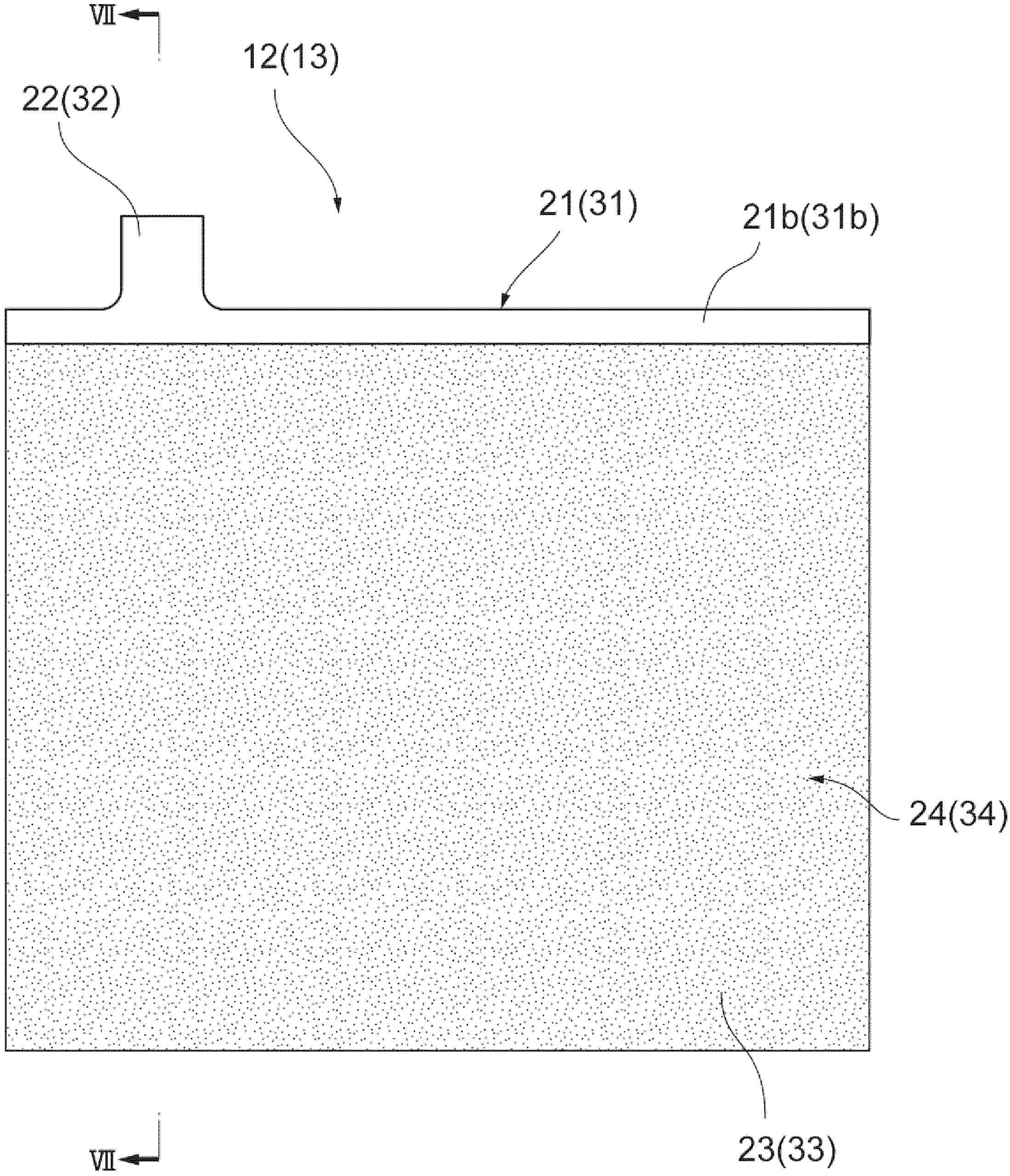

Fig.7

(a)

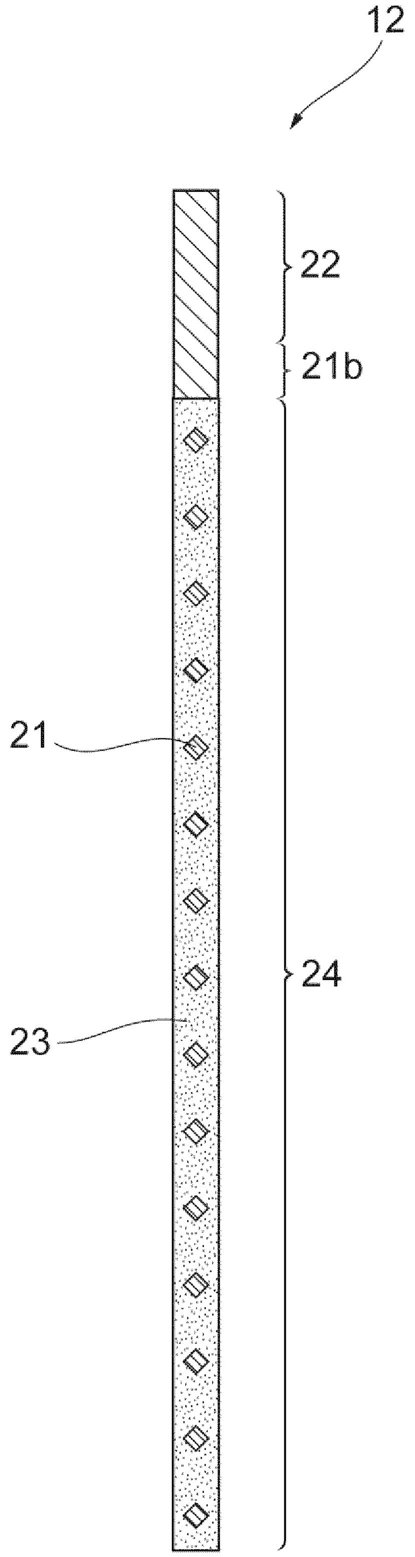


(b)

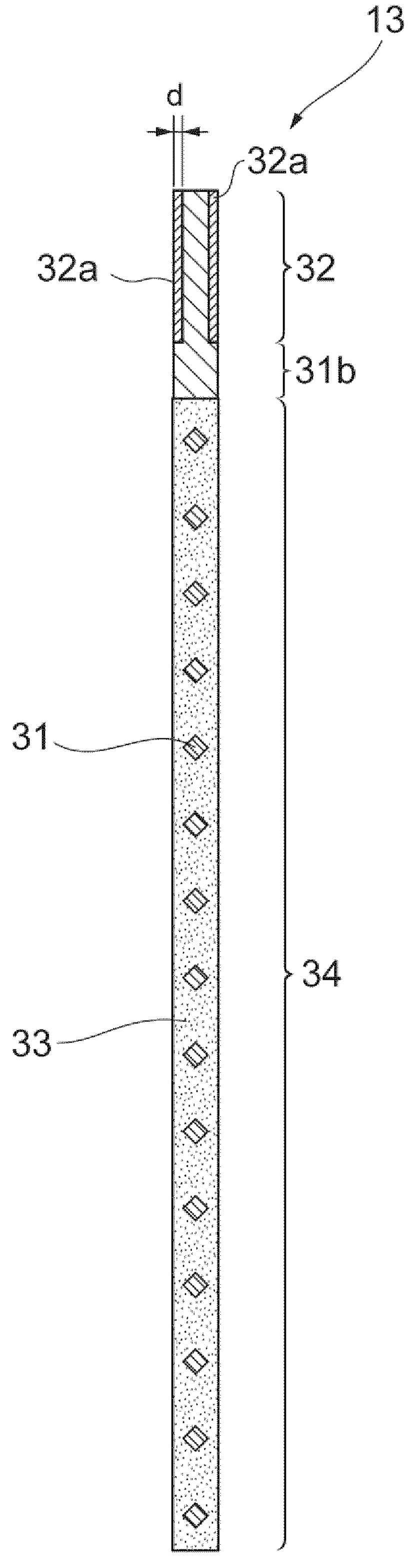

*Fig.8*

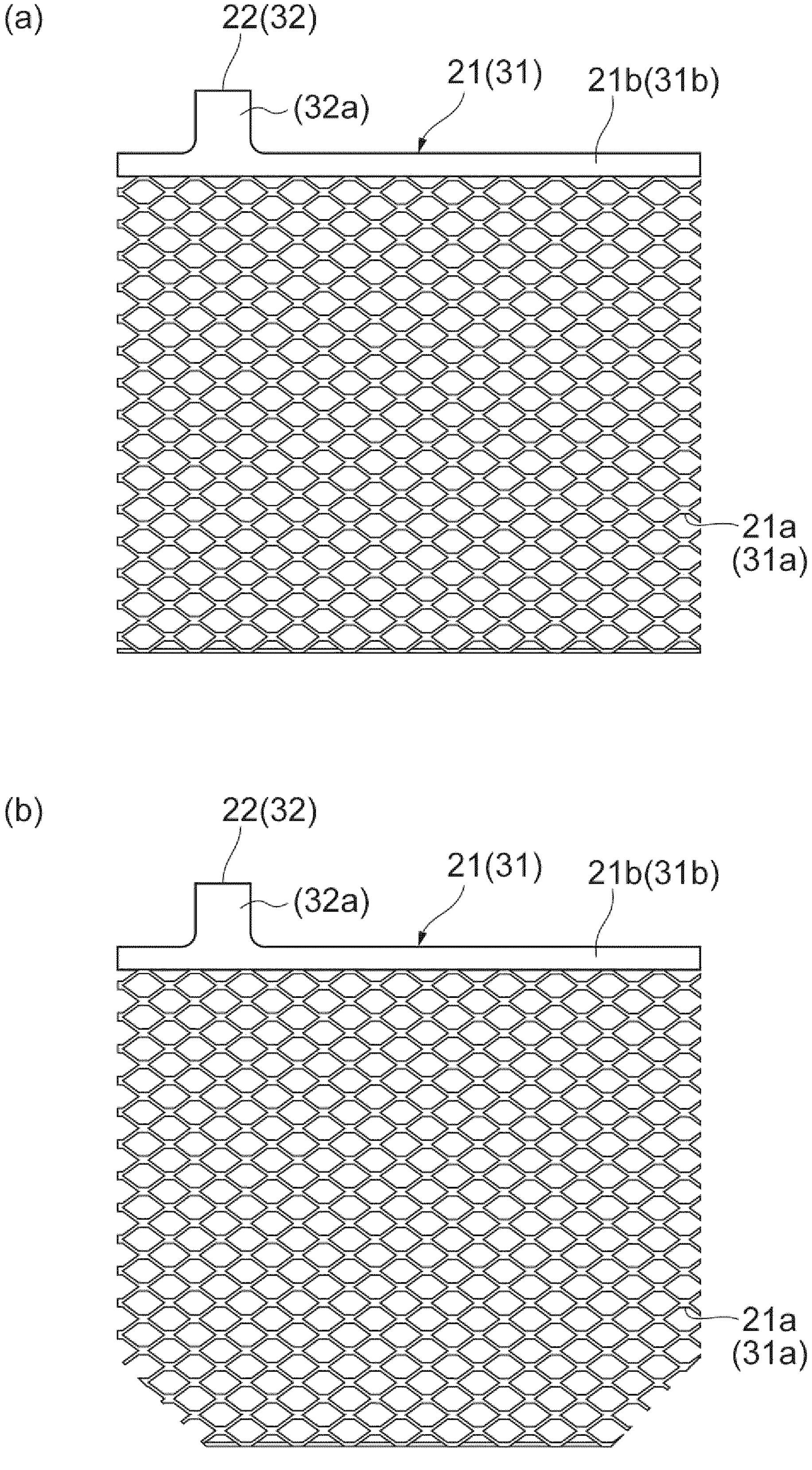

# Fig.9

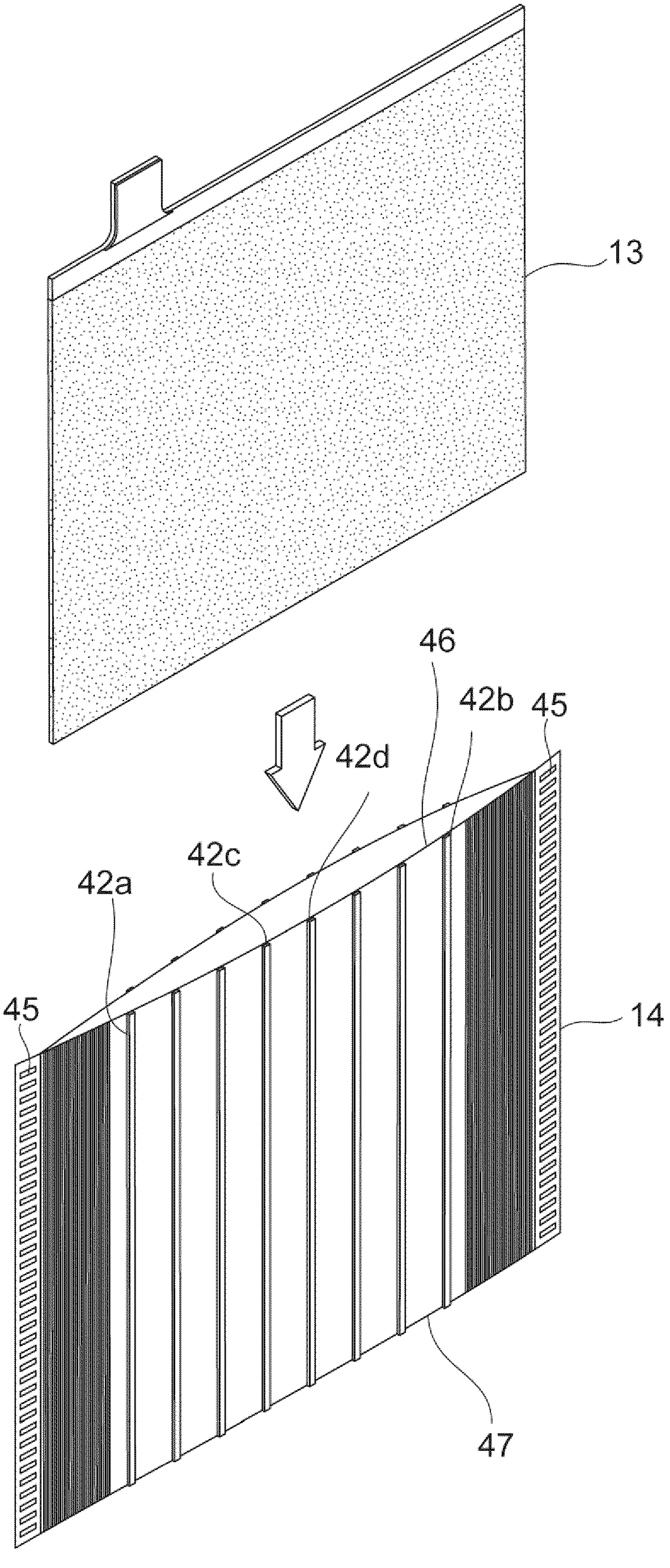

Fig.10

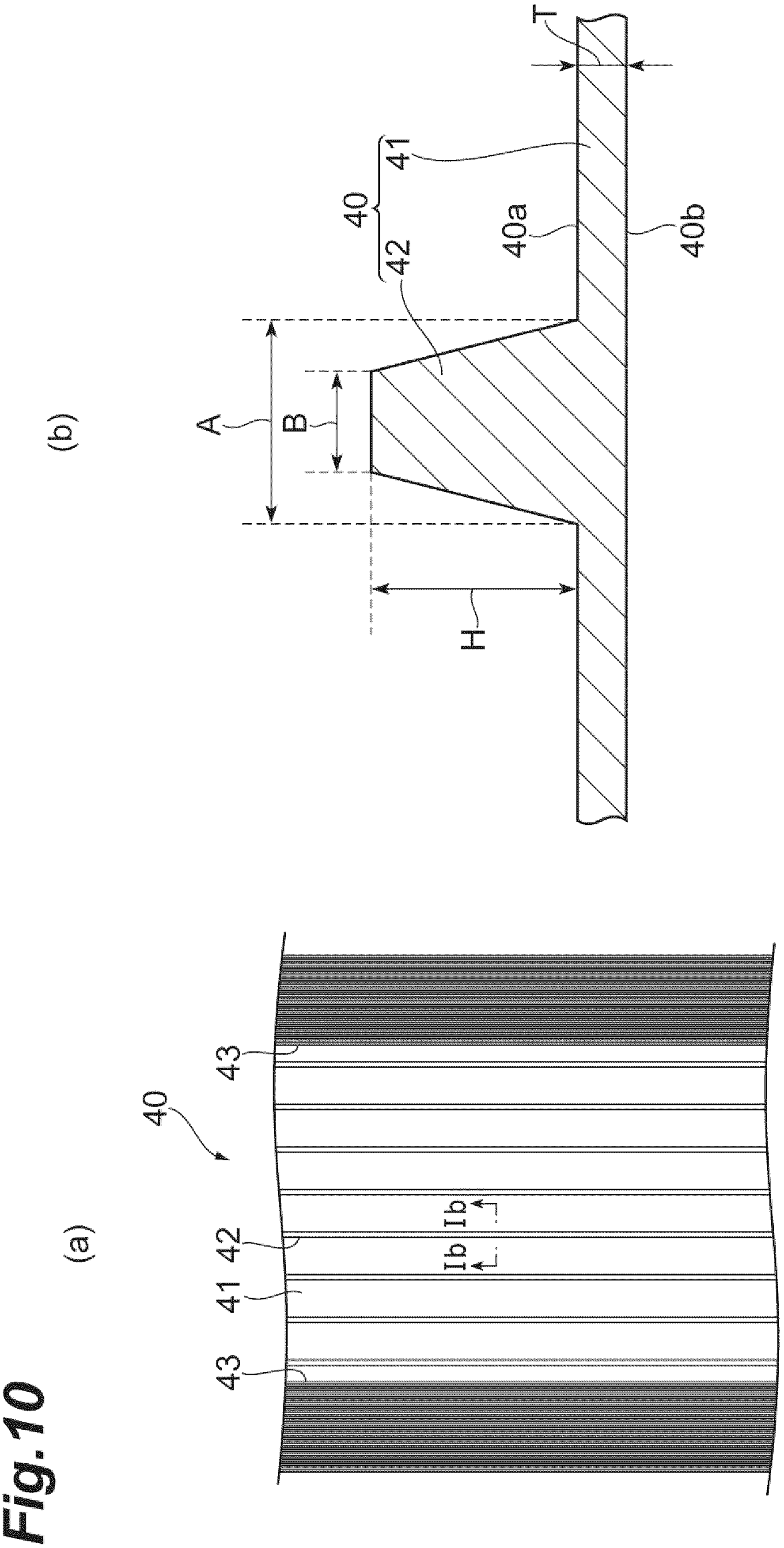

# Fig.11

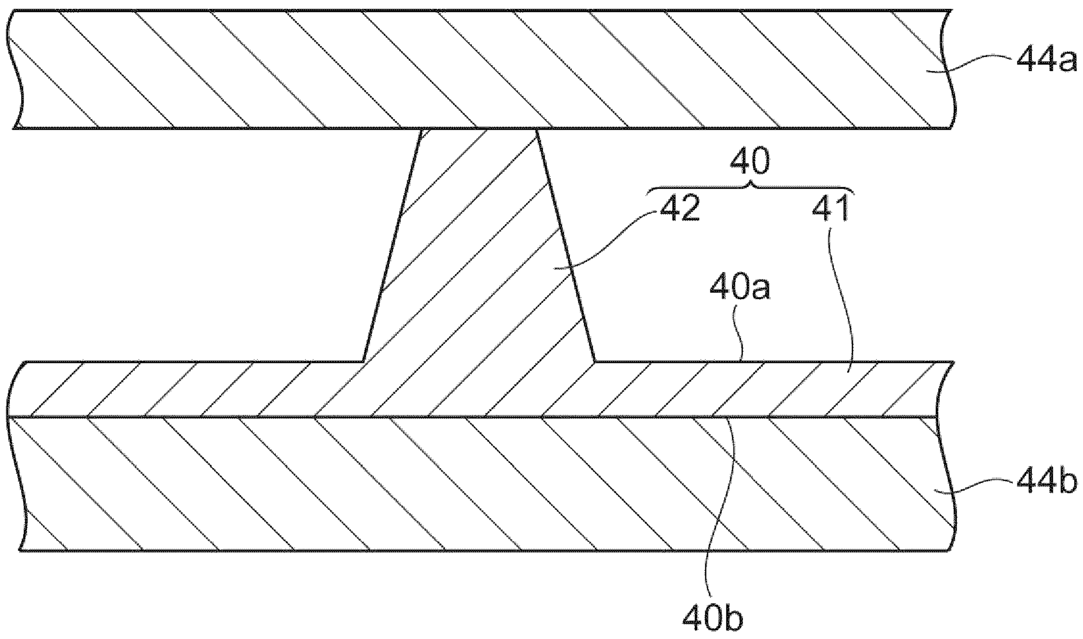

Fig.12

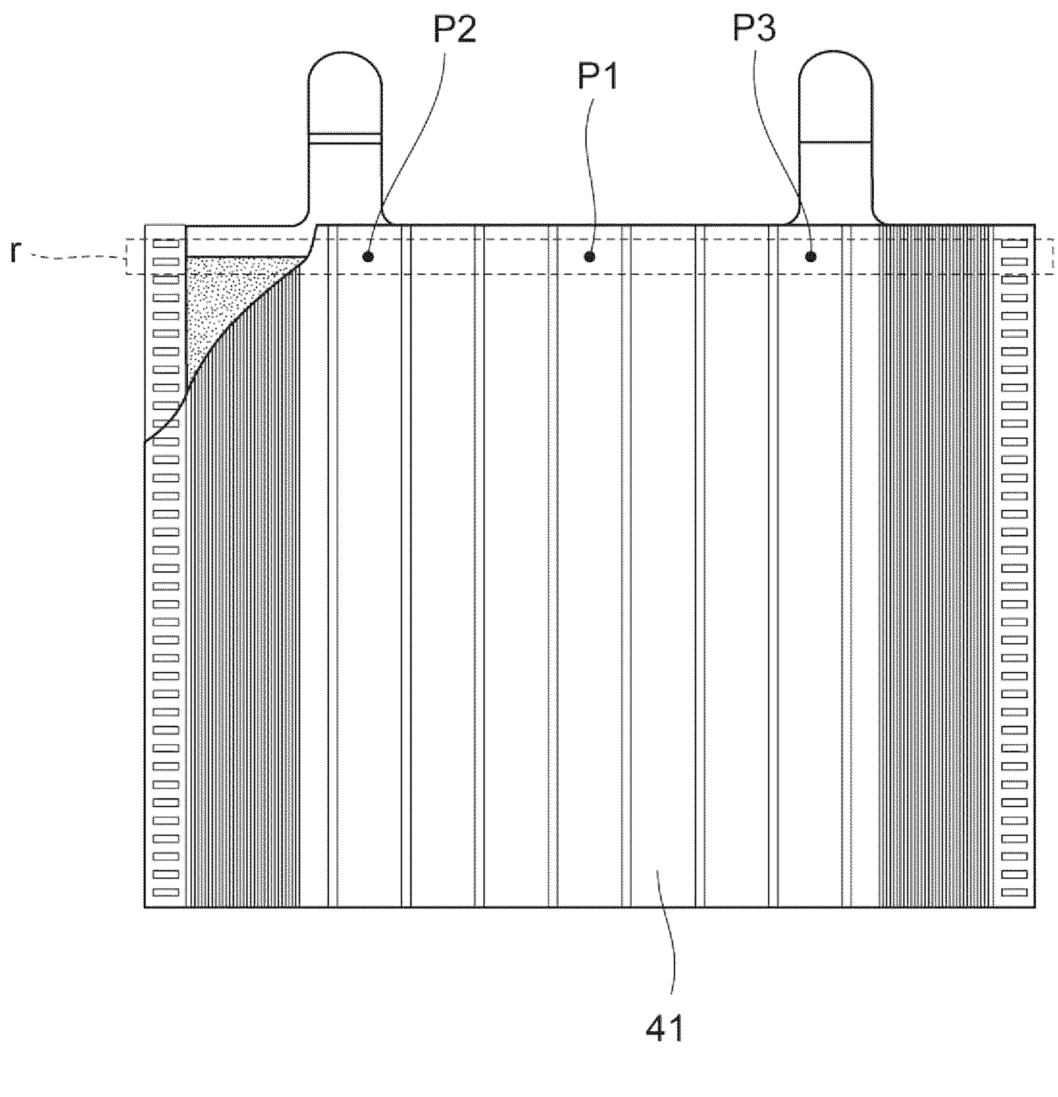

# Fig.13

(a)

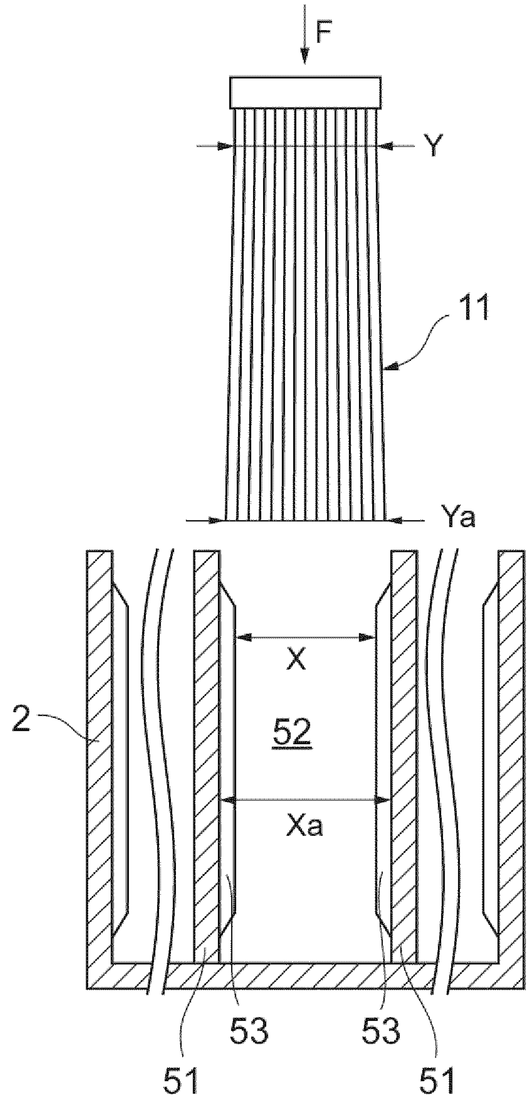


(b)

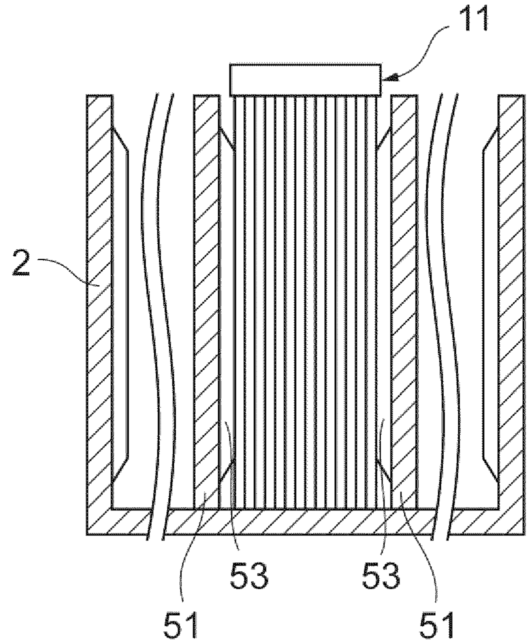

**INTERNATIONAL SEARCH REPORT**

International application No.
PCT/JP2016/086430

A. CLASSIFICATION OF SUBJECT MATTER
*H01M10/12*(2006.01)i, *H01M10/08*(2006.01)i

According to International Patent Classification (IPC) or to both national classification and IPC

B. FIELDS SEARCHED

Minimum documentation searched (classification system followed by classification symbols)
H01M10/12, H01M10/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| E,X | JP 2017-027924 A (Hitachi Chemical Co., Ltd.), 02 February 2017 (02.02.2017), claims 1 to 4 (Family: none) | 1-13 |
| X<br>Y | JP 2002-208431 A (The Furukawa Battery Co., Ltd.), 26 July 2002 (26.07.2002), claims 1 to 3 (Family: none) | 1-4,7-10,13<br>5,6,11,12 |
| X<br>Y | JP 7-130390 A (Matsushita Electric Industrial Co., Ltd.), 19 May 1995 (19.05.1995), paragraph [0004] (Family: none) | 1-4,7-10,13<br>5,6,11,12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 February 2017 (27.02.17) | 07 March 2017 (07.03.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2016/086430

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 2005-190748 A (The Furukawa Battery Co., Ltd.),<br>14 July 2005 (14.07.2005),<br>claim 1<br>(Family: none) | 1-4,7-10,13<br>5,6,11,12 |
| Y | JP 2016-171018 A (Panasonic Intellectual Property Management Co., Ltd.),<br>23 September 2016 (23.09.2016),<br>claim 3<br>(Family: none) | 5,11 |
| Y | WO 2012/043331 A1 (GS Yuasa International Ltd.),<br>05 April 2012 (05.04.2012),<br>claim 1<br>& JP 2015-187990 A & CN 103109412 A | 5,6,11,12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5656068 B